(19) **Europäisches Patentamt / European Patent Office / Office européen des brevets**

(11) **EP 4 668 590 A1**

(12) **EUROPEAN PATENT APPLICATION**
published in accordance with Art. 153(4) EPC

(43) Date of publication:
**24.12.2025 Bulletin 2025/52**

(21) Application number: **24757321.5**

(22) Date of filing: **16.02.2024**

(51) International Patent Classification (IPC):
*H04B 1/7143* (2011.01)    *H04L 5/00* (2006.01)
*H04W 64/00* (2009.01)    *H04W 24/08* (2009.01)

(52) Cooperative Patent Classification (CPC):
**H04B 1/7143; H04L 5/00; H04W 24/08; H04W 64/00**

(86) International application number:
**PCT/KR2024/095314**

(87) International publication number:
**WO 2024/172604 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023 KR 20230021072**

(71) Applicant: **LG Electronics Inc.**
**Yeongdeungpo-gu**
**Seoul 07336 (KR)**

(72) Inventors:
- **HWANG, Seunggye**
  **Seoul 06772 (KR)**
- **KO, Hyunsoo**
  **Seoul 06772 (KR)**
- **GO, Seongwon**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR WIRELESS SIGNAL TRANSMISSION/RECEPTION IN WIRELESS COMMUNICATION SYSTEM**

(57) A method by which a terminal transmits a sounding reference signal (SRS) in a wireless communication system, according to at least one of the embodiments disclosed in the present specification, comprises: receiving, through radio resource control (RRC) signaling, configuration information about an SRS for positioning; and transmitting the SRS for positioning on the basis of hopping of a plurality of SRS frequency bands, wherein the plurality of SRS frequency bands for hopping are linked to each SRS time resource set including a plurality of time resources, and the terminal can drop, on the basis that one part of the first SRS time resource set at least partially overlaps a time period configured for other signals, the SRS for positioning in all of the plurality of time resources included in a first SRS time resource set.

**FIG. 23**

## Description

### TECHNICAL FIELD

The present disclosure relates to a wireless communication system, and more particularly, to a method and apparatus for transmitting and receiving a wireless signal.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the disclosure is to provide a method and device for transmitting or receiving signals more accurately and efficiently in a wireless communication system.

The objects of the disclosure are not limited thereto, and other objects may be inferred from the disclosed embodiments.

### TECHNICAL SOLUTION

In one aspect of the present disclosure, a method of transmitting a sounding reference signal (SRS) by a terminal in a wireless communication system may include receiving configuration information related to an SRS for positioning through radio resource control (RRC) signaling, and transmitting the SRS for positioning based on hopping among a plurality of SRS frequency bands, wherein the plurality of SRS frequency bands for the hopping may be associated with respective SRS time resource sets including a plurality of time resources. Based on that a part of a first SRS time resource set overlaps, at least partially, with a time duration configured for another signal, the terminal may drop the SRS for positioning in all of the plurality of time resources included in the first SRS time resource set.

The time duration configured for the another signal may include (i) a time resource mapped to the another signal and (ii) a time gap arranged before or after the mapping of the another signal.

Based on that the first SRS time resource set overlaps, at least partially, with the time gap, the terminal may drop the SRS for positioning in all of the plurality of time resources included in the first SRS time resource set.

Without hopping to a first SRS frequency band associated with the first SRS time resource set, the terminal may hop to a second SRS frequency band, the second SRS frequency band being a next hopping band after the first SRS frequency band.

Based on the hopping to the second SRS frequency band, the terminal may resume the transmission of the SRS for positioning in a second SRS time resource set associated with the second SRS frequency band.

Based on that the part of the first SRS time resource set overlaps, at least partially, with the time duration configured for the another signal, the terminal may drop the SRS for positioning in at least one of an SRS time resource set arranged before the first SRS time resource set or an SRS time resource set arranged after the first SRS time resource set.

The plurality of symbols included in the first SRS time resource set may include (i) SRS symbols and (ii) at least one time gap symbol arranged before or after the SRS symbols.

Based on that the at least one time gap symbol overlaps, at least partially, with the time duration configured for the another signal, the terminal may drop the SRS for positioning in all of the plurality of time resources included in the first SRS time resource set.

The at least one time gap symbol may be a time duration for frequency re-tuning of the terminal.

A total size of the plurality of SRS frequency bands may exceed a maximum terminal bandwidth that can be transmitted by the terminal. The terminal may perform hopping among the plurality of SRS frequency bands through the frequency re-tuning of the terminal.

In another aspect of the present disclosure, a processor-readable recording medium having recorded thereon a program for executing the above-described SRS transmission method may be provided.

In another aspect of the present disclosure, a device for wireless communication may include a memory configured to store instructions, and a processor configured to perform operations by executing the instructions. The operations of the processor may include receiving configuration information related to an SRS for positioning through radio resource control (RRC) signaling, and transmitting the SRS for positioning based on hopping among a plurality of SRS frequency bands. The SRS frequency bands for the hopping may be associated with respective SRS time resource sets including a plurality of time resources. Based on that a part of a first SRS time resource set overlaps, at least partially, with a time duration configured for another signal, the SRS for positioning may be dropped in all of the plurality of time resources included in the first SRS time resource set.

The device may further include a transceiver.

The device may be a terminal operating in a wireless communication system.

The device may be a processing device configured to control a terminal operating in a wireless communication system.

In another aspect of the present disclosure, a method of receiving a sounding reference signal (SRS) for positioning by at least one base station in a wireless communication system may include transmitting configuration information related to an SRS for positioning through radio resource control (RRC) signaling, and receiving the SRS for positioning based on hopping among a plurality of SRS frequency bands. The SRS frequency bands for the hopping may be associated with respective SRS time resource sets including a plurality of time resources. Based on that a part of a first SRS time resource set overlaps, at least partially, with a time duration configured for another signal, the SRS for positioning may be dropped in all of the plurality of time resources included in the first SRS time resource set.

In another aspect of the present disclosure, a base station for wireless communication may include at least one memory configured to store instructions, and at least one processor configured to perform operations by executing the instructions. The operations of the at least one processor may include transmitting configuration information related to an SRS for positioning through radio resource control (RRC) signaling, and receiving the SRS for positioning based on hopping among a plurality of SRS frequency bands. The SRS frequency bands for the hopping may be associated with respective SRS time resource sets including a plurality of time resources. Based on that a part of a first SRS time resource set overlaps, at least partially, with a time duration configured for another signal, the SRS for positioning may be dropped in all of the plurality of time resources included in the first SRS time resource set.

ADVANTAGEOUS EFFECTS

According to an embodiment of the present disclosure, a signal can be more accurately and efficiently transmitted or received in a wireless communication system.

The effects of the disclosure are not limited thereto, and other advantageous effects may be inferred from the disclosed embodiments.

**BRIEF DESCRIPTION OF THE DRAWINGS**

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot

FIG. 5 illustrates an exemplary physical downlink shared channel (PDSCH) reception and acknowledgement/negative acknowledgement (ACK/NACK) transmission process.

FIG. 6 illustrates an exemplary physical uplink shared channel (PUSCH) transmission process.

FIG. 7 illustrates an example of setting a positioning protocol.

FIG. 8 illustrates an example of OTDOA.

FIG. 9 illustrates an example of Multi RTT.

FIG. 10 illustrates a procedure for operating a network node (e.g., an upper node of a user equipment (UE), location management function (LMF), etc.) according to an embodiment.

FIG. 11 illustrates a UE operation procedure for performing positioning measurement.

FIG. 12 illustrates various integrated sensing and communication (ISAC) environments.

FIG. 13 illustrates an example of SRS-p-FH.

FIG. 14 illustrates an example of overlapping of time gaps of two SRS-p-FH resources.

FIG. 15 illustrates an example of Gap-O configuration.

FIG. 16 illustrates an example of Proposal 3 in which unit resources of SRS-p-FH overlapping with Gap-O are dropped.

FIG. 17 illustrates an example of symbol-level TU-O application in Proposal 2.

FIG. 18 illustrates an example of TU-O application per hopping unit in Proposal 2.

FIG. 19 illustrates an example of hop bundle-level TU-O application in Proposal 2.

FIG. 20 illustrates an example of Proposal 3 in which a continuous time interval including SRS-p-FH unit resources overlapping with Gap-O is dropped.

FIG. 21 illustrates an example of symbol-level TU-O application in Proposal 3.

FIG. 22 illustrates an example of TU-O application per hopping unit in Proposal 3.

FIG. 23 illustrates an example of hop bundle-level TU-O application in Proposal 3.

FIG. 24 is a diagram illustrating operations of a UE and a network in a wireless communication system according to an embodiment.

FIG. 25 illustrates a flow of a method of transmitting an SRS by a UE according to an embodiment.

FIG. 26 illustrates a flow of a method of receiving an SRS by a base station according to an embodiment.

FIGS. 27 to 30 illustrate an example of a communication system 1 and wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

As used herein, the term "base station" may be replaced by terms such as fixed station, Node B, gNode B (gNB), Access Point (AP), cell, or transmission and reception point (TRP). The term relay may be replaced by terms such as relay node (RN), relay station, and the like. Also, the term "terminal" may be replaced by terms such as user equipment (UE), mobile station (MS), mobile subscriber station (MSS), subscriber station (SS), and the like.

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321 Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System
- GPS: Global Positioning System
- LCS: LoCation Service
- LMF: Location Management Function
- LPP: LTE Positioning Protocol
- MO-LR: Mobile Originated Location Request
- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference
- ToA: Time of Arrival
- TP: Transmission Point
- TRP: Transmission and Reception Point
- UE: User Equipment
- SS: Search Space
- CSS: Common Search Space
- USS: UE-specific Search Space

- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- TX: Transmitter
- RX: Receiver
- RSTD: Reference Signal Time Difference
- RS: Reference Signal
- PRS: Positioning Reference Signal
- SRS: Sounding Reference Signal

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

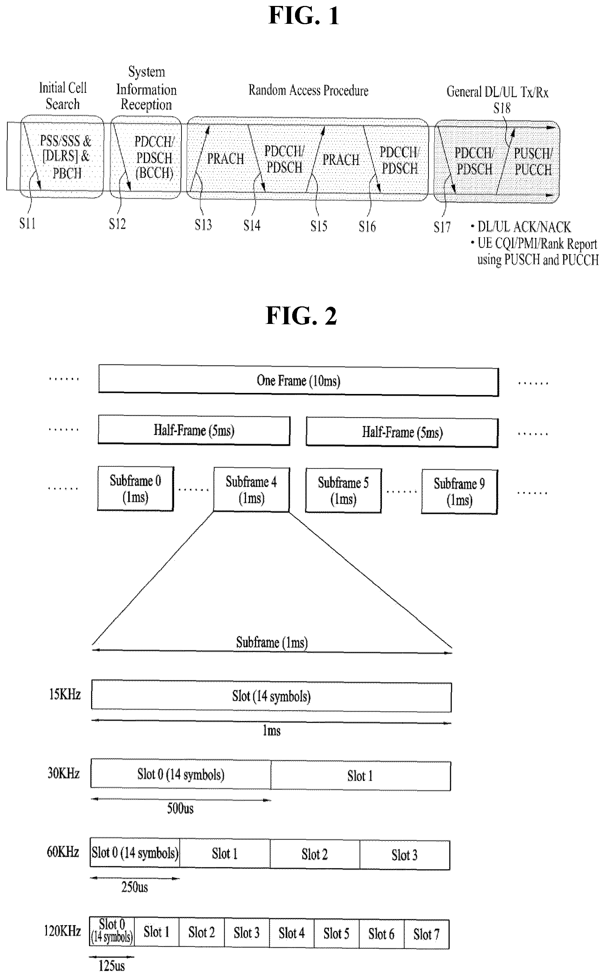

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

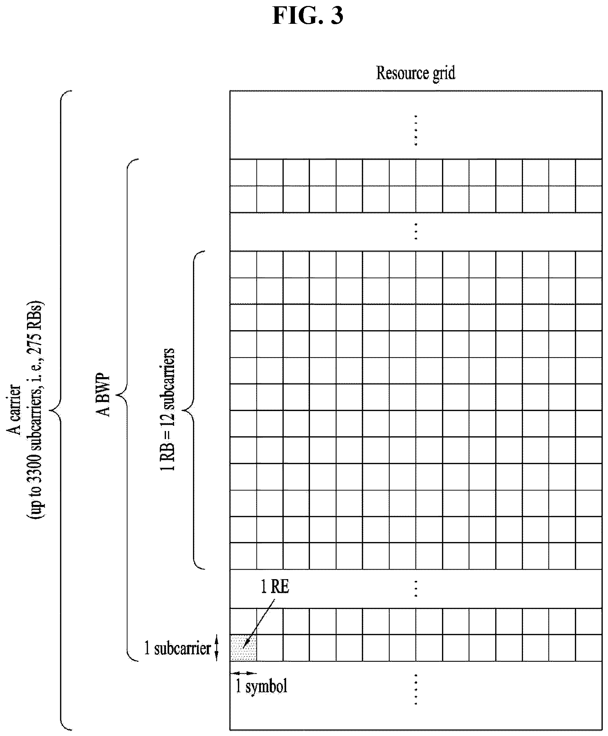

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

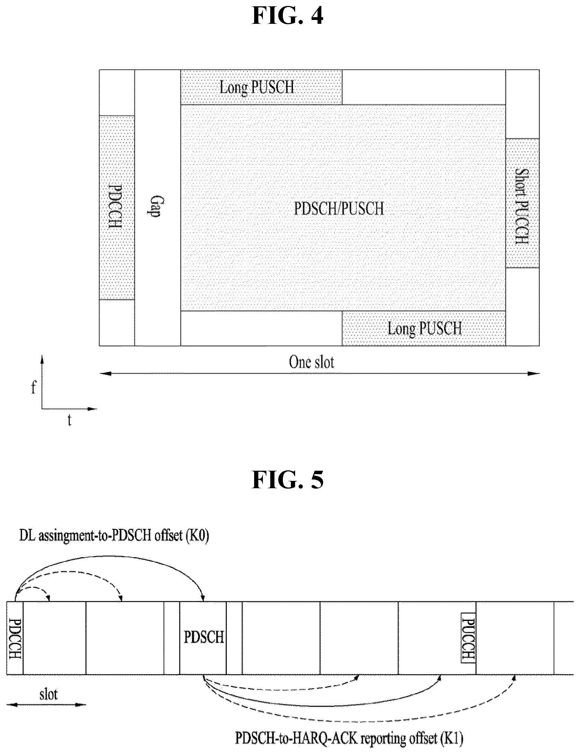

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot #(n+K1). The UCI may include an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

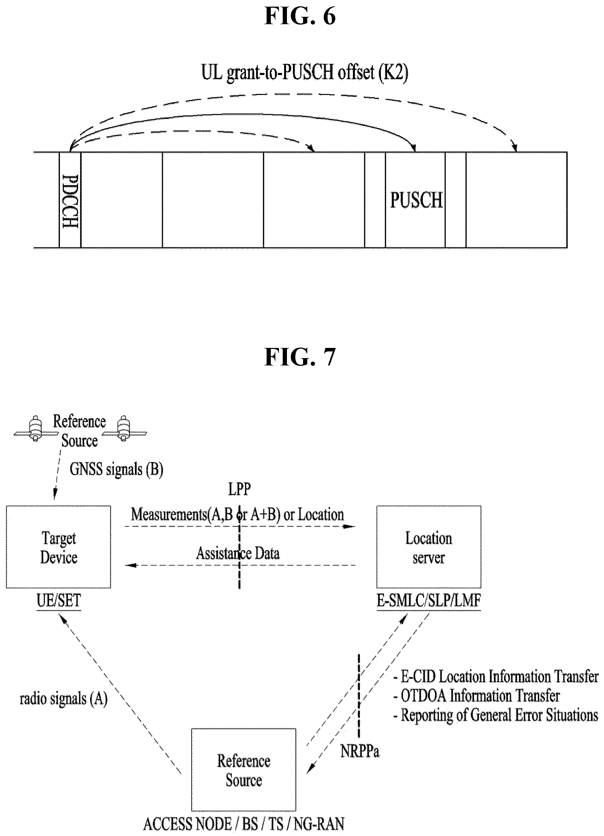

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

### SRS (sounding reference signal)

The SRS is a UL reference signal transmitted by a UE and received by a BS. Based on the SRS, the BS may perform operations such as link adaptation, DL channel estimation based on channel reciprocity, UL beam management, UL precoding, and/or UL measurement acquisition.

The UE may receive SRS configuration information (e.g., TS38.331 SRS-Config IE) provided by the BS and determine parameters for SRS transmission based thereon. The configuration of the SRS is composed of a list of SRS-Resources, SRS-PosResources, SRS-ResourceSets, and SRS-PosResourcesets, where the SRS-ResourceSets and SRS-PosResourcesets each include sets of SRS-Resources and SRS-PosResources, respectively.

SRSs may be classified into three resource types according to the configuration of the time resources and transmission method.

When the resource type is set as periodic, the UE determines the position where the SRS resource configured through RRC is transmitted based on the configured period and offset, and periodically transmits, when configured, the SRS without separate signaling.

When the resource type is set as semi-persistent, the UE determines the position where the SRS resource configured through RRC is transmitted based on the configured period and offset. Then, when transmission of the SRS is activated by MAC CE, the UE starts periodic transmission of the indicated SRS. When the transmission is deactivated by MAC CE, the UE stops transmitting the SRS.

When the resource type is set as aperiodic, the UE transmits the indicated SRS in consideration of the position of the offset configured through RRC with respect to the reception timing of the DCI indicating triggering of the corresponding SRS resource set.

### Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 7 is a diagram illustrating an exemplary positioning protocol configuration for positioning a UE, to which various embodiments are applicable.

Referring to FIG. 7, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.

- OTDOA Information Transfer. This function allows the reference source to exchange information with the LMF for the purpose of OTDOA positioning.
- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference of Arrival)

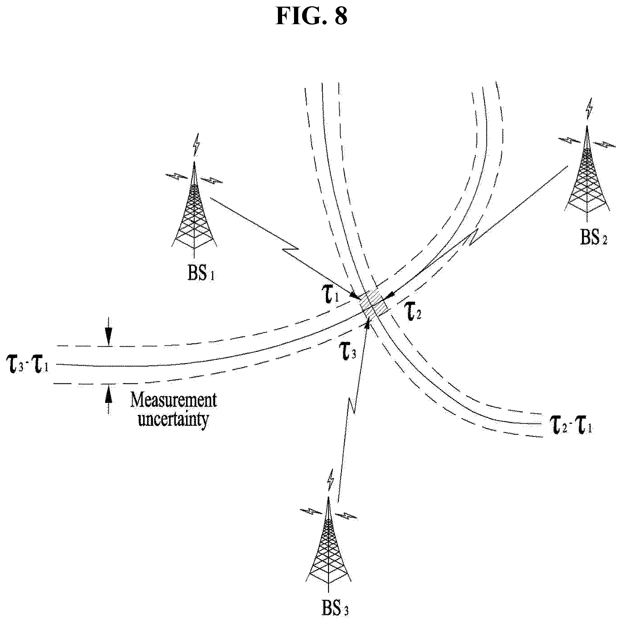

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTDi,1 = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 1, c is the speed of light, $\{x_t, y_t\}$ are (unknown) coordinates of a target UE, $\{x_i, y_i\}$ are (known) coordinates of a TP, and $\{x_l, y_l\}$ are coordinates of a reference TP (or another TP). Here, $(T_i - T_l)$ is a transmission time offset between two TPs, referred to as "real time differences" (RTDs), and $n_i$ and $n_l$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance ($T_{ADV}$), and/or AoA

Here, $T_{ADV}$ may be divided into Type 1 and Type 2 as follows.

$T_{ADV}$ Type 1 = (ng-eNB Rx-Tx time difference)+(UE E-UTRA Rx-Tx time difference)

$$T_{ADV} \text{ Type } 2 = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

Multi RTT (round trip time)

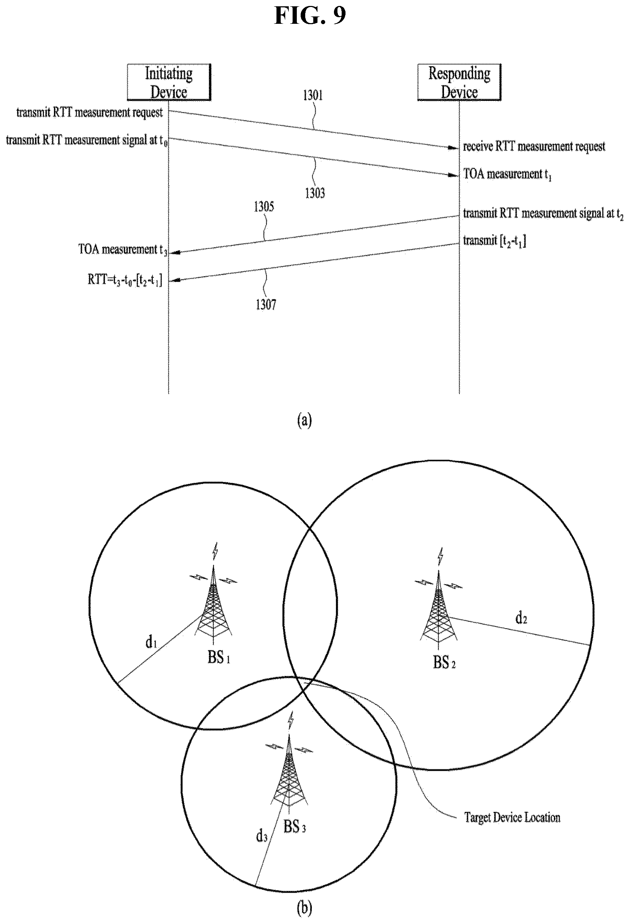

FIG. 9 is a diagram illustrating an exemplary multi-round trip time (multi-RTT) positioning method to which various embodiments are applicable.

Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at $t_0$ and the responding device may acquire a ToA measurement t1(1303).

The responding device may transmit an RTT measurement signal at t2 and the initiating device may acquire a ToA measurement t3 (1305).

The responding device may transmit information about [t2-t1], and the initiating device may receive the information and calculate an RTT by Equation 2 (1307). The information may be transmitted and received based on a separate signal or in the RTT measurement signal (1305).

[Equation 2]

$$RTT = t_3 - t_0 - [t_2 - t_1]$$

Referring to FIG. 9(b), an RTT may correspond to a double-range measurement between two devices. Positioning estimation may be performed from the corresponding information, and multilateration may be used for the positioning estimation. $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

NG-RAN Positioning Architecture and Procedures

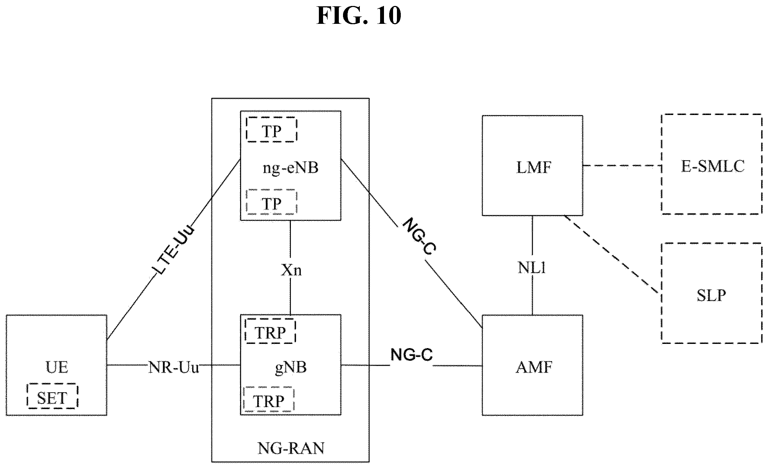

FIG. 10 illustrates a positioning structure of a next generation (NG) radio access network (RAN). The NG RAN may be referred to as a NR RAN or 5G RAN.

An AMF may receive a request for location services related to a specific target UE from other entities (e.g., gateway mobile location centre (GMLC) or UE) or may decide to initiate the location services itself on behalf of the specific target UE (e.g., in the case of IP multimedia subsystem (IMS) emergency calls). Subsequently, the AMF may forward the location service request to an LMF. The LMF may process the location service request, where processing the location service request may include transmitting assistance data to the target UE for UE-based and/or UE-assisted positioning and/or positioning of the target UE. The LMF transmits location service results (e.g., location estimates for the UE) to the AMF. When the location services are requested by other entities (e.g., GMLC or UE), the AMF transmits the location service results to the other entities.

An NG-RAN node may control TRPs/TPs such as RRM or DL-PRS only TPs to support a PRS-based terrestrial beacon system (TBS).

The LMF may be connected to an enhanced serving mobile location centre (E-SMLC) to access universal terrestrial radio access network (UTRAN) information.

The LMF can be connected to a secure user plane location (SUPL) location platform (SLP), which is responsible for positioning relative to the user plane.

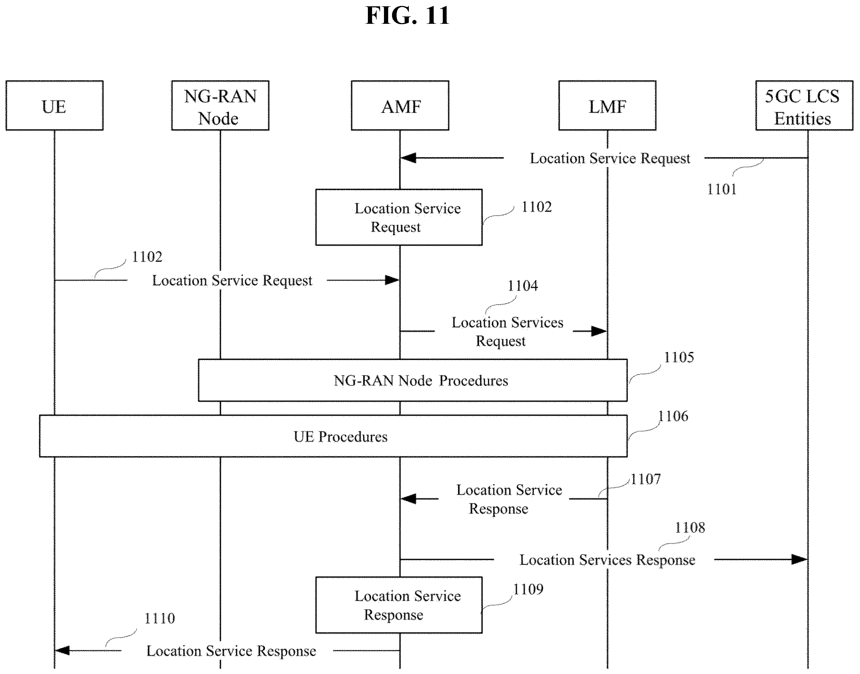

FIG. 11 illustrates an example of location services supported in a NG-RAN.

When a UE is in a connection management idle (CM-IDLE) state, if an AMF receives a location service request, the AMF performs a network trigger service request to configure signaling for a connection to the UE and allocation of a specific serving gNB/ng-eNB. In FIG. 11, it is assumed that the UE is in the connected mode.

Location service requests for the UE may be triggered, and the requests for the UE may be one of steps 1101, 1102, and 1103. For example, an entity in a 5GC such as a GMLC may request location services (e.g., positioning) for a target UE from a serving AMF (1101). Alternatively, the serving AMF may trigger location services (e.g., to find the UE for emergency calls) for the target UE itself (1102). Further, the UE may request location services (e.g., positioning or assistance data transfer) from the serving AMF at the NAS level (1103).

The AMF forwards the location service request to an LMF (1104).

The LMF provides services in the NG-RAN to acquire location measurements or assistance data and initiates a positioning procedure with a neighboring ng-eNB/gNBs (1105).

(Instead of or additionally to step 1105) The LMF initiates the positioning procedure with the UE to obtain location estimates or positioning measurements or transmit location assistance data to the UE (1106).

The LMF provides a location service response to the AMF (1107) (e.g., success or failure and location estimates for the UE if obtained).

(In step 1101) The AMF provides the location service response to the 5GC entity (1108) (e.g., location estimates for the UE).

(In step 1102) The AMF supports the services triggered in step 1102 based on the location service response received in step 1107 (1109) (e.g., providing location estimates related to emergency calls to the GMLC).

(In step 1103) The AMF provides the location service response to the UE (1110) (e.g., location estimates for the UE).


**SRS (Sounding Reference Signal) for Positioning**

In Rel. 15 NR systems, periodic, aperiodic, and semi-persistent Rel. 15 SRSs may be transmitted for UL relative time of arrival (UL RTOA), UL SRS-RSRP, and UL-AOA measurements at the BS, thereby supporting UL TDOA and UL AOA.

In Rel. 16/17 NR systems, periodic, aperiodic, and semi-persistent SRSs for positioning may be transmitted for UL RTOA, UL SRS-RSRP, UL-AOA, and gNB Rx-Tx time difference measurements at the BS, thereby supporting for UL TDOA, UL AOA, and multi-RTT.

Depending on the purpose of use of the SRS, RRC parameters are configured. For example, for an SRS for positioning, the configuration is indicated by SRS-PosResources and SRS-PosResourceSet. For SRSs serving other purposes (e.g., Rel.15 SRS), the configuration is indicated by SRS-Resources and SRS-ResourceSet.

Hereinafter, to avoid confusion between the SRS for positioning and the SRS for other purposes, the SRS for positioning is referred to as SRS-p, and the SRS used for other purposes (e.g., beam management) is referred to as SRS-m. In the new proposals of the present disclosure discussed below, the SRS may be interpreted as SRS-p, unless stated otherwise.

It is neither defined nor prohibited in the standard for a BS to use SRS-m transmitted by a UE to acquire measurements for positioning. Therefore, the use is a matter of choice related to implementation of the BS. Accordingly, the UE is not provided with information about whether SRS-m is used for positioning or is not affected thereby.

The SRS-p configuration is provided based on the serving cell (or camp-on cell) of the UE, and the SRS-p transmitted by the UE based on the SRS-p configuration may be received by one or more cells (or TRPs), including the serving cell.

As an example, the SRS-p may be configured through the RRC parameters SRS-PosResourceSet and SRS-PosResource defined in the TS 38.331 standard. Specifically, when a higher layer parameter SRS-PosResource is configured for the SRS (i.e., SRS-p), and a higher layer parameter SpatialRelationInfoPos is configured, the ID of the configuration field for the reference RS is provided. The reference RS may be an SRS configured by the higher layer parameter SRS-Resource or SRS-PosResource, CSI-RS, SS/PBCH block, DL PRS of the serving cell, or DL PRS configured in the SS/PBCH block.

The UE is not expected to transmit multiple SRS resources with different spatial relationships on the same OFDM symbol.

If the higher layer parameter SpatialRelationInfoPos is not configured, the UE may use either a fixed spatial domain transmission filter or a different spatial domain transmission filter to transmit the SRS-p configured by the higher layer parameter SRS-PosResource across multiple SRS resources.

In the RRC_CONNECTED mode, the UE transmits the SRS-p configured by the higher layer parameter SRS-PosResource within an active UL BWP.

Only one RS source is provided for the higher layer parameter SpatialRelationInfoPos provided for each SRS-p resource.

In the case of operation on the same carrier, if the SRS-p conflicts with a scheduled PUSCH, the SRS-p is dropped on symbols where the collision occurs.

The UE does not expect that SRS-PosResource will be configured on the carrier of the serving cell with a slot format consisting of DL/UL symbols that are not configured for PUSCH/PUCCH transmission.

Depending on UE capabilities, SRS-p resources associated with an initial UL BWP may be configured, and the SRS-p resources are transmitted within the initial UL BWP in the RRC_INACTIVE mode with the same CP and SCS as configured for the initial UL BWP. Depending on UE capabilities, SRS-p resources for positioning may be configured outside the initial BWP in the RRC_INACTIVE mode, and a frequency location, bandwidth, SCS, and CP length may be configured for SRS-p transmission. The SRS-p resources configured outside the initial BWP in the RRC_INACTIVE mode are configured in the same bandwidth and CC as the initial UL BWP.

### ISAC (Integrated Sensing and Communication)

Various methods for using wireless sensing are being widely discussed in recent wireless communication systems. In general, the conventional radar technology may be considered for the purpose of wireless sensing. However, there may be constraints associated with radar technology for sensing, as it is specialized for sensing and may not consider the characteristics of communication. Additionally, separate devices may be required for transmitting and receiving nodes to transmit and receive signals for wireless sensing. To address these issues, methods for using wireless sensing in wireless communication systems that support cellular networks, such as 5G and/or next-generation 6G, are actively being researched. For example, these methods include integrated sensing and communication (ISAC) or joint communication and sensing (JCAS).

In 3GPP standardization, studies for supporting ISAC in 5G/6G have been initiated. According to TR 22.837 published by 3GPP SA1 WG, wireless sensing is defined as a technology that uses radio waves to measure a distance, angle, or instantaneous velocity for the purpose of acquiring information on the environment and/or surrounding objects. A scenario where sensing and communication share the same frequency band and hardware is being considered. In addition, methods of sharing or reusing radio waves intended for communication (e.g., RSs for communication such as an SSB, DMRS, CSI-RS, and/or SRS) for radio waves for sensing or methods of designing separate radio waves for wireless sensing may also be considered.

In general, wireless sensing supported in ISAC involves a process where signals transmitted from the transmitter are reflected off a target object and received by the receiver. Depending on the relationship between the transmitter and receiver, different sensing modes may be defined. Based on whether the transmitter and receiver are matched, a case where the transmitter and receiver are matched may be defined as a mono-static sensing mode, and a case where the transmitter and receiver are not matched may be defined as a bi-static sensing mode.

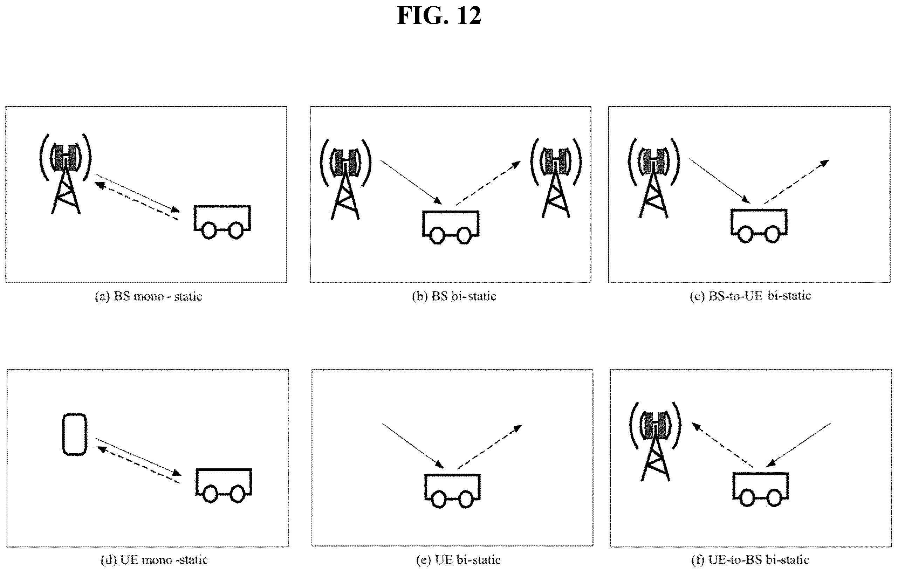

FIG. 12 illustrates examples of wireless sensing modes supported in ISAC.

Referring to FIG. 12, considering the transmission and reception operations in the 3GPP standard and the nodes participating therein, sensing modes may be broadly categorized as follows.

(a) BS mono-static sensing mode: A BS that transmits a radio wave receives a reflected signal.
(b) BS-to-BS bi-static sensing mode: Another BS receives a reflected signal of a radio wave transmitted by a specific BS.

(c) BS-to-UE bi-static sensing mode: A UE receives a reflected signal of a radio wave transmitted by a BS.

(d) UE mono-static sensing mode: A UE that transmits a radio wave receives a reflected signal.

(e) UE-to-UE bi-static sensing mode: Another UE receives a reflected signal of a radio wave transmitted by a specific transmitting UE.

(f) UE-to-BS bi-static sensing mode: A BS receives a reflected signal of a radio wave transmitted by a transmitting UE.

In addition to the six use cases described above, a sensing mode including multiple transmitting/receiving nodes may be referred to a multi-static sensing mode.

The application of wireless sensing through ISAC/JCAS is being considered in various scenarios. Generally, wireless sensing is considered for the purpose of acquiring information on a target with no communication module (or independent of communication modules). For example, considerable scenarios may be broadly divided into three scenarios.

(1) Object detection and tracking: This scenario aims to detect target objects or people and track location information. For example, the following scenarios: intrusion detection in indoor/outdoor environments, tracking the position of an unmanned aerial vehicle (UAV) or automated guided vehicle (AGV), and supporting autonomous driving may be considered.

(2) Environment monitoring: This scenario aims to collect information on the surrounding environment of transmitting/receiving nodes. For example, the following scenarios: rainfall observation and flood detection may be considered.

(3) Motion monitoring: This scenario aims to detect the motion of a target. For example, scenarios for distinguishing human movements or gestures may be considered.

The performance metrics and levels required for each of the above scenarios may vary and differ from one another. To design suitable ISAC/JCAS for the service quality required for each scenario, various key performance requirements need to be considered. In the 3GPP standard, TS 22.137, key performance requirements required for each service scenario are defined as follows: positioning estimation accuracy, velocity estimation accuracy, reliability (confidence level), sensing resolution, missed detection probability, false alarm probability, maximum sensing service delay, and refreshing rate. The required levels for each key performance requirement may vary depending on the service scenario.

The proposals discussed below are also applicable to the ISAC environment described above.

Frequency hopping (FH) of SRS for positioning

The method of mapping SRS resources in the time/frequency domain on a resource grid (e.g., FIG. 3) is defined in the standards documents. For SRS-m, repetition within a slot may be configured, and intra-slot frequency hopping based thereon is supported. However, for SRS-p, repetition within a slot cannot be configured according to the current NR standard (Rel-17), and intra-slot frequency hopping is not supported. For a periodic/semi-persistent SRS, inter-slot frequency hopping is supported in a periodic manner.

The present disclosure proposes new operations related to frequency hopping of SRS-p, including, for example, collision handling for frequency-hopped SRS-p.

For simplicity, a structure in which frequency hopping (FH) is applied to SRS-p is referred to as SRS-p-FH. For example, SRS-p-FH may refer to SRS-p to which FH is applied.

In 3GPP Rel-17 NR, reduced capability (RedCap) UEs, which have relatively low complexity and low cost compared to eMBB and URLLC UEs, have been defined, and operations therefor have been introduced. One of the key features of the RedCap UEs is that the maximum UE bandwidth is supported up to 20 MHz in FR1 and 100 MHz in FR2. This means that a narrower band is supported for RedCap UEs than for other general UEs for which 100 MHz in FR1 and 200 MHz in FR2 are supported.

Among the positioning techniques supported by 3GPP NR, timing-based positioning is a positioning method performed by measuring the propagation delay until the reference signal (i.e., DL PRS or UL SRS) transmitted by the transmitter is received by the receiver. In timing-based positioning, the size of the BW over which the reference signal is transmitted and received is one of the main factors affecting positioning accuracy. Generally, higher positioning accuracy may be expected when reference signals transmitted and received over a wider BW are used. For RedCap UEs, as described above, there are constraints on the maximum BW that may be supported for transmission and reception of reference signals. As a result, positioning accuracy may be significantly degraded for RedCap UEs.

To overcome this issue, Rel-18 NR may take into account methods to improve positioning accuracy, such as forming a structure in which transmission and reception of a reference signal for positioning by RedCap UEs is repeated in the time/frequency domain. For example, the introduction of a transmission/reception FH structure for reference signals may be considered. The transmission FH refers to FH performed by the transmitter in a narrowband to transmit a reference signal, and the reception FH refers to FH performed to a narrowband by the receiver to receive the reference signal when the transmitter transmits the reference signal in a wideband at multiple time points.

FH of the reference signal may be an advantage in terms of positioning accuracy. However, it requires more time resources due to the repeated transmission of the reference signal over time, which may result in collision with other signals/channels, which may lead to scheduling constraints for other signals/channels or failure in transmitting/receiving the reference signal. If transmission/reception of other signals/channels is constrained by the FH of the reference signal, the throughput for data transmission/reception may be reduced. If transmission/reception of the reference signal is constrained, positioning accuracy may be degraded.

Since FH for the SRS-p of the UE is not supported in the current NR standard, the FH for the SRS-p needs to be newly defined to support FH of the RedCap UE. In this regard, as an example of the FH structure that may be considered, multiple hops for transmission of SRS-p may be configured in a frequency range exceeding the BW capability of the RedCap UE. To this end, an SRS-p FH operation across multiple slots may be introduced. As a result, as described earlier, the duration for transmission of SRS-p may be extended due to FH, and efficient collision handling for FH-applied SRS-p needs to be considered.

According to the existing NR standard, in the case where transmission/reception of SRS-p overlaps with other signals/channels, the UE may determine the operation to perform based on a predefined priority rule. For example, at the positions of symbols where the aperiodic SRS-p overlaps with a PUCCH for a specific purpose (e.g., PUCCH carrying semi-persistent/periodic CSI report(s), or semi-persistent/periodic L1-RSRP report(s) only, or only L1-SINR report(s)), the UE should transmit the SRS-p. However, the standard specifies that the UE should not transmit the SRS-p at symbol positions where a PUCCH for other purposes or a scheduled PUSCH overlaps with the SRS-p.

Additionally, collision handling needs to be considered in cases where SRS-ps of different resource types overlap with each other. According to the existing NR standard, the priorities of the resource types of SRS-p are defined in order of aperiodic, semi-persistent, and periodic (i.e., aperiodic has the highest priority). When the UE is instructed to transmit SRS-ps of different resource types in an overlapping manner, the UE should transmit the SRS-p of the resource type with a higher priority, and drop transmission of the SRS-p of the resource type with a lower priority at the symbol positions where overlapping occurs.

When applying the existing SRS-p collision handling method to FH-applied SRS-p, issues may arise due to the characteristics of FH and RedCap UEs. For example, when FH of SRS-p for the RedCap UE is supported, the UE may need to perform operations including RF retuning at each hop change position due to the constraints of the BW capability of RedCap UE. For general signals/channels to which FH is not applied, the BW position where transmission/reception is performed may not be the same as the position on the frequency axis of the hop where FH is performed. In this case, the dropping rule for SRS-p applied at the symbol level may cause frequent RF retuning of the RedCap UE, resulting in complexity and power consumption. As another example, to ensure high positioning accuracy, it may be advantageous to continuously arrange reference signals in the frequency domain. If some SRS-p symbols are dropped, resulting in discontinuous intervals, positioning performance may be significantly degraded.

Considering these issues, the present disclosure proposes a collision handling rule that is advantageous for achieving high accuracy of positioning and low complexity and power consumption of the UE when FH-applied SRS-p collides with other signals/channels or other SRS-ps during transmission/reception of the FH-applied SRS-p.

Although the following description focuses on situations where the RedCap UE transmits the SRS-p, the present disclosure is not limited thereto and may be generally applied to cases where FH (or repeated transmission) of SRS-p is required due to constraints such as the BW capability of the UE.

Although the present disclosure mainly describes the collision handling rule for SRS-p, the present disclosure is not limited thereto and may be generally applied to the transmission/reception of other signals (e.g., DL PRS, DMRS, CSI-RS, SSB, SRS other than the SRS-p) or channels.

Although the methods proposed in the present disclosure are described focusing on a positioning technique in the UL direction supported in the 3GPP NR system, the proposed methods are not limited thereto. They and may be generally applied to other positioning techniques capable of measuring UE positioning. The proposed methods may be applied to all types of transmission/reception schemes and positioning techniques expected by the BS and the UE.

The methods proposed in the present disclosure may be implemented independently without any combination, or one or more of the methods may be combined and implemented in an associated manner. Some terms, symbols, and sequences used herein may be replaced with other terms, symbols, and sequences.

**[Proposal 11 Determining priority in situations of overlapping/collision with SRS-p-FH**

The present disclosure proposes a method of determining the priority of an FH-applied SRS-p (hereinafter, SRS-p-FH) when the SRS-p-FH collides with other signals/channels or with another SRS (e.g., SRS-p, SRS-p-FH, or SRS for other purposes).

Relationship between SRS-p-FH and SRS-m with the same resource type

The proposed method may include an assumption necessary for the configuration of SRS-p-FH and SRS-m with the same resource type and actual transmission/reception of the SRSs. A UE capable of receiving configuration of both transmission of the SRS-p-FH and transmission of the SRS-m and performing the transmissions may be configured/defined to assume that the entire interval of the SRS-p-FH will not overlap with the transmission interval of the SRS-m. Here, the entire interval of SRS-p-FH may include an entire interval from the symbol at which the first hop of FH of the SRS-p starts to the symbol at which the last hop of FH ends. In addition, time gaps of certain duration may be additionally configured at the start and end points of the entire interval of SRS-p-FH, when necessary.

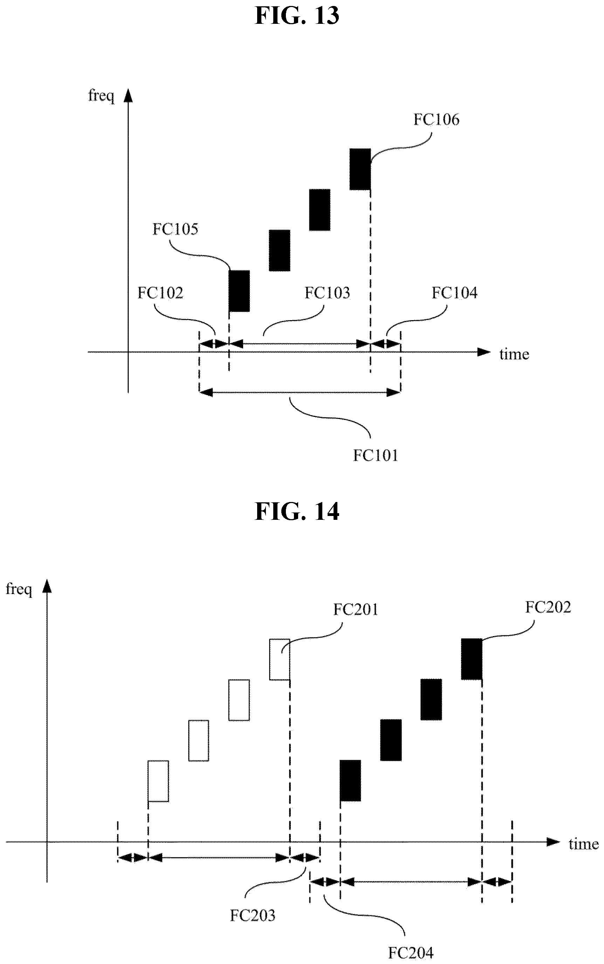

FIG. 13 illustrates an example of SRS-p-FH. FIG. 13 illustrates a case where FH is performed for SRS-p resources. In the figure, each block represents an SRS-p resource. FC101 represents the entire interval of SRS-p-FH, which may include an interval FC103 from a time point FC105 at which the symbol for the first hop of the SRS-p-FH starts to a time point FC106 at which the symbol for the last hop of the SRS-p-FH ends and may further include a time gap FC102 configured based on the time point FC105 and a time gap FC104 configured based on FC106, when necessary. FIG. 13 is merely an example of application of the proposed details and embodiments are not limited thereto.

As a specific example, when the resource types of SRS-p-FH and SRS-m are both set as periodic, the UE may not expect SRS-p-FH and SRS-m to be configured at the position of the overlapping symbol.

As another specific example, the resource types of SRS-p-FH and SRS-m are both set as semi-persistent or aperiodic, the UE may be configured/defined not to expect SRS-p-FH and SRS-m to be activated or triggered at the position of the overlapping symbol.

Relationship between SRS-p-FH and another SRS-p-FH/SRS-p with the same resource type

The proposed method may include an assumption necessary for the configuration of i) an SRS-p-FH and ii) another SRS-p-FH or SRS-p with the same resource type and actual transmission/reception of the SRSs. A UE capable of receiving configuration of both transmission of the SRS-p-FH and transmission of the SRS-p and performing the transmissions may be configured/defined to assume that the entire interval of the SRS-p-FH will not overlap with the transmission interval of the SRS-p in performing the transmissions. Also, a UE capable of receiving configuration of transmission of one or more SRS-p-FHs and performing the transmission may be configured/defined to assume that the entire intervals of the different SRS-p-FHs will not overlap with each other in performing the transmission. However, as an exception, the intervals of the time gap constituting the SRS-p-FHs may be allowed to overlap with each other by configuration/definition.

FIG. 14 illustrates a case where two SRS-p-FH resources are configured and time gaps in the entire intervals of the SRS-p-FHs partially overlap with each other. FIG. 14 illustrates an example case where FH is performed among SRS-p resources. In figure, each block represents an SRS-p resource, and FC201 and FC202 represent hops belonging to the entire intervals of different SRS-p-FHs. The time gap FC203 included in the entire interval of the first SRS-p-FH and the time gap FC204 included in the entire interval of the second SRS-p-FH partially overlap with each other. As shown in FIG. 14, SRS-p-FHs of the same resource type for which only the time gaps overlap with each other may be configured/defined to allow such overlapping. Considering that one purpose of configuring time gaps is to ensure the RF retuning time for the UE, the overlapping time gap intervals may still be sufficient to ensure this purpose such that maintaining the entire intervals of the two SRS-p-FHs is advantageous in terms of positioning accuracy. FIG. 14 is merely an example of application of the proposed details, and embodiments are not limited thereto.

As a specific example, the UE may be configured/defined to expect that, at positions of overlapping symbols, the entire interval of an SRS-p-FH with the resource type set as periodic and one or more SRS-ps will not be configured. However, the UE may expect that the configuration may be exceptionally allowed in the case where only time gaps in the entire intervals of different SRS-p-FHs overlap with each other.

As a specific example, the UE may be configured/defined to expect that, at positions of overlapping symbols, the entire interval of an SRS-p-FH with the resource type set as semi-persistent or aperiodic and one or more SRS-ps will not be activated or triggered. However, the UE may expect that the configuration may be exceptionally allowed in the case where only time gaps in the entire intervals of different SRS-p-FHs overlap with each other.

Relationship between SRS-p-FH and SRS-m/SRS-p/SRS-p-FH with different resource types

The proposal may include may include an assumption necessary for the configuration of the SRS-p-FH and the SRS-m, SRS-p, or another SRS-pos-FH with different resource types and actual transmission/reception of the SRSs. For a UE capable of receiving configuration of one or more of SRS-p-FH, SRS-p, and SRS-m and transmitting the same, the transmission of an SRS (i.e., SRS-p-FH, SRS-p, and SRS-m) with the resource type set as aperiodic may be defined to have higher priority than the transmission of SRSs with the resource type set as periodic or semi-persistent, and the transmission of an SRS with the resource type set as semi-persistent may be defined to have higher priority than an SRS with the resource type set as periodic.

When the SRS-p-FH has higher priority than another SRS according to the resource type, the UE may be configured/defined to transmit the SRS-p-FH at the positions of symbols at which the entire interval of the SRS-p-FH overlaps with the other SRS, and the transmission of the other SRSs may be configured/defined to be dropped at the positions of symbols at which overlapping occurs.

When the SRS-p-FH has lower priority than the other SRS according to the resource type, the UE may be configured/defined to transmit the other SRS at the positions of symbols at which at which the entire interval of the SRS-p-FH overlaps with the other SRS, and the entire interval of the SRS-p-FH, including the positions of the symbols at which overlapping occurs, may be configured/defined to be fully or partially dropped. In this case, the specific method by which the SRS-p-FH is dropped may follow various proposals disclosed in the present disclosure.

As a specific example, at positions of symbols at which the entire interval of SRS-p-FH for which the resource type is set as aperiodic and transmission is triggered overlaps with another SRS for which the resource type is set as periodic or semi-persistent and transmission is activated, the UE may be configured/defined to transmit the entire interval of the SRS-p-FH and the transmission of the other SRS may be configured/defined to be dropped at the positions of the symbols at which overlapping occurs.

As a specific example, at positions of symbols at which an SRS for which the resource type is set as aperiodic and transmission is triggered overlaps with an SRS-p-FH for which the resource type is set as periodic or semi-persistent and transmission is activated, the UE may be configured/defined to fully or partially drop the entire interval of the SRS-p-FH including the positions of the symbols at which overlapping occurs and may be configured/defined to transmit the aperiodic SRS having a higher priority.

As a specific example, at positions of overlapping symbols at which the entire interval of the SRS-p-FH with a resource type set to semi-persistent and transmission activated overlaps with another SRS with a resource type set to periodic, the UE may be configured/defined to transmit the entire interval of the SRS-p-FH and drop the transmission of the other SRS at those overlapping positions.

As a specific example, at positions of symbols where of an SRS for which the resource type is set as semi-persistent and transmission is activated overlaps with an SRS-p-FH with the resource type set as periodic, the UE may be configured/defined to fully or partially drop the entire interval of the SRS-p-FH including the symbols at which overlapping occurs and transmit the semi-persistent SRS having a higher priority.

Relationship between SRS-p-FH and PUCCH/PUSCH

The proposal may include an assumption necessary for the configuration of SRS-p-FH and PUCCH/PUSCH and actual transmission/reception thereof.

When a collision occurs between the position of an SRS-p-FH for which transmission is indicated and a scheduled PUSCH, a UE capable of receiving and configuration of the SRS-p-FH and transmitting the SRS-p-FH may be configured/defined to fully or partially drop the entire interval of the SRS-p-FH including the symbols at which overlapping occurs.

Specifically, when a collision occurs between the entire interval of the SRS-p-FH and a scheduled PUSCH operating on the same carrier, the UE may be configured/defined to fully or partially drop the entire interval of the SRS-p-FH including the symbols at which the collision occurs. In this case, as a specific method of dropping the SRS-p-FH, the method proposed in this proposal may be applied.

When a collision occurs between the position of an SRS-p-FH for which transmission is indicated and a PUSCH, a UE capable of receiving configuration of the SRS-p-FH and performing transmission may be configured/defined to determine the priority based on the resource types and purposes of the SRS-p-FH and the PUCCH.

Specifically, when the following conditions are met, the UE may be configured/defined to fully or partially drop the entire interval of the SRS-p-FH including the positions of symbols at which the PUCCH overlaps with the SRS-p-FH.

A collision occurs between the entire interval of SRS-p-FH with the resource type set as periodic or semi-persistent and PUCCH carrying only CSI report(s), or only L1-RSRP report(s), or only L1-SINR report(s).

A collision occurs between the entire interval of SRS-p-FH for which the resource type is set as periodic, semi-persistent, or aperiodic and transmission is triggered and PUCCH carrying HARQ-ACK, link recovery request, and/or SR.

Additionally, when a collision occurs between the entire interval of an SRS-p-FH for which the resource type is set as aperiodic and transmission is triggered and PUCCH carrying semi-persistent/periodic CSI report(s) or semi-persistent/periodic L1-RSRP report(s) only, or only L1-SINR report(s), the UE may select and use one of the following options. The selection of the options may follow a pre-agreed instruction between the BS and the UE or an instruction from an upper node (e.g., the BS or location server).

(Option #1) The UE may be configured/defined to transmit the entire interval of the SRS-p-FH and not to transmit the PUCCH.

(Option #2) The priorities of the SRS-p-FH and PUCCH may be determined based on a specific condition. An example of the specific condition is that the entire section of the SRS-p-FH overlaps with the PUCCH. As a specific example, the entire interval of the SRS-p-FH may overlap with the PUCCH. In this case, when the duration (or proportion) of a portion of the entire interval of the SRS-p-FH that is determined to be dropped is less than or equal to a specific threshold, the UE may be configured/defined to transmit the PUCCH. Otherwise, while dropping the corresponding portion of the SRS-p-FH. Otherwise, the UE may be configured/defined to transmit the entire interval of the SRS-p-FH and not to transmit the PUCCH.

**[Proposal 21 Dropping units of** SRS-p-FH **overlapping with Gap-O**

Configuration of Gap-O

The transmission of general UL signals/channels by a RedCap UE is performed over the active UL BW (e.g., UL active BWP). On the other hand, as mentioned above, if FH operation of SRS-p is introduced to enhance positioning performance, RF retuning may be required due to constraints of BW capability of the RedCap UE, which may cause the transmission of some SRS-p resources actually included in the SRS-p-FH to differ from that of the bandwidth over which general UL signals/channels are transmitted. As a result, when a UL signal/channel with a higher priority needs to be transmitted due to a collision between the entire interval of the SRS-p-FH and the UL signal/channel, a time gap may be required considering UE operations such as RF retuning.

Considering these points, the present disclosure defines Gap-O to design a structure in which a portion of the entire interval of the SRS-p-FH is dropped, and also proposes operations of the UE and the BS based on Gap-O. When the interval of symbols in which overlapping with other signals/channels occurs in the entire interval of SRS-p-FH is defined as O-symbols, the transmission of the SRS-p-FH should be dropped at the positions of the O-symbols in order to ensure the transmission/reception of other signals/channels with higher priority. In this context, the interval of Gap-O may be configured/defined to include the interval of O-symbols. Further, to ensure UE operations such as RF retuning for the transmission/reception of other signals/channels that serve as the basis of configuring the interval of O-symbols, an additional gap of certain duration may be needed. Considering this need, the Gap-O interval may be configured/defined to include an additional time gap interval (hereafter, add-time-gap) that is contiguously arranged before and after the O-symbol interval.

As a specific example of the configuration of the Gap-O, when the indexes of the symbols at which overlapping occurs are n to n+m-1, and the duration of the time gap required to be guaranteed in order for the UE to perform operations such as RF retuning is 'a' symbols, the indexes of the symbols constituting the Gap-O may be determined as n-a to n+m+a-1.

In the configuration of the Gap-O, when a specific condition is met, it may be allowed that the add-time-gap is not fully or partially configured. For example, when the BW region where other signals/channels that are the cause of generation of O-symbols are transmitted/received is identical to the BW region where the UE transmits SRS-p immediately before (or after) the transmission of the other signals/channels or includes the same (e.g., one hop of SRS-p-FH is performed on the active BWP where the other signals/channels are transmitted/received), the add-time-gap interval immediately before (or after) the O-symbols may be configured/defined not to be included in the configuration of the Gap-O.

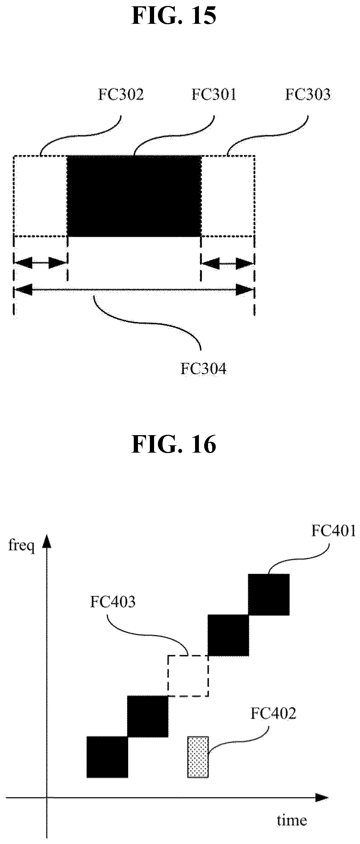

FIG. 15 illustrates an example of Gap-O configuration. In FIG. 15, FC301 indicates the interval of O-symbols in which the entire interval of SRS-p-FH overlaps with other UL signals/channels. Also, an add-time-gap (FC302 in FIG. 15) is arranged adjacent to the O-symbol interval at an earlier time point and an add-time-gap (FC303 in FIG. 15) is arranged adjacent to the O-symbol interval at a later time point. In this structure, Gap-O may be defined as an interval FC304 that includes the intervals FC301, FC302, and FC303. FIG. 15 is merely an example of application of the proposed details, and embodiments are not limited thereto.

To support the operation of Gap-O, an upper node (e.g., BS or location server) may determine configuration information related to Gap-O and provide the same through a higher layer signal (e.g., RRC or LPP). The configuration information may include the size of the add-time-gap. Subsequently, the BS may schedule and transmit/receive UL/DL signals/channels or expect to receive SRS-p-FH in consideration of the structure in which dropping the SRS-p-FH is determined based on the configuration information about the add-time-gap provided to the UE. The UE may receive the configuration information and determine the structure of Gap-O based thereon. Thereafter, when the SRS-p-FH scheduled by the BS overlaps with other signals/channels, the UE may perform transmission/reception operations by applying the structure of Gap-O.

Hereinafter, the methods proposed will be described using the concept of Gap-O and terminology described above. However, the idea and concept of the proposed methods are not limited thereto, and it will be understood by those skilled in the art that they may be used in general wireless communication systems that use a collision handling method considering a structure including a set of symbols in which overlapping occurs, such as the Gap-O, and time gaps arranged adjacent to the set.

Dropping TU-O overlapping with Gap-O occurs

In Proposal 2, when a collision occurs between the entire interval of SRS-p-FH and other signals/channels and a portion of the entire interval of the SRS-p-FH needs to be dropped, it is proposed that time units (hereinafter TU-Os) including actual SRS-p transmission symbols that overlap with the Gap-O interval generated due to the collision be dropped. In this case, the UE may be configured/defined to perform SRS-p transmission in the remaining portion of the entire interval of the SRS-p-FH excluding the TU-Os that the UE has determined to drop.

FIG. 16 illustrates a conceptual example of the method proposed in Proposal 2. Referring to FIG. 16, FC401 indicates the hops where SRS-p resources constituting the SRS-p-FH are actually transmitted, and FC402 indicates the transmission/reception of other signals/channels overlapping with a portion of the entire interval of SRS-p-FH. The UE drops only the transmission of the TU-O in which overlapping with other signals/channels has occurred (FC403) and transmits the other TU-Os in which the overlapping has not occurred. FIG. 16 is merely an example of application of the proposed details, and embodiments are not limited thereto.

For the criteria for determining TU-Os and the specific operations of the UE and BS based thereon, one of the following options may be selected and used. When the BS is allowed to select and apply one of the following options, the BS may provide instruction information related to the operation of the TU-O to the UE through a higher layer signal (e.g., RRC), MAC CE, or DCI, and the UE may receive the information and execute a dropping rule that is applied to the SRS-p-FH.

(Option #1) Symbol-level application of TU-O

The dropping rule may be applied to the entire interval of SRS-p-FH based on the symbol-level TU-O. The UE may check whether the positions of the transmission symbols of actual SRS-p resources constituting the SRS-p-FH overlap with Gap-O. The UE may be configured/defined to drop the transmission of SRS-p resources for symbols at which overlapping occurs. In this case, the number of SRS-p symbols transmitted by the UE within the interval of SRS-p-FH may be maximized, thereby improving positioning accuracy.

As an additional method applicable to Option #1, when overlapping with Gap-O occurs in a specific hop constituting SRS-p-FH, and the number of remaining SRS-p symbols excluding the symbols dropped due to the overlap is less than or equal to a specific threshold, the remaining symbols may also be configured/defined to be dropped. This scheme may improve UE efficiency in consideration of the complexity and power consumption caused by the operations (e.g., RF retuning) of the UE required for transmission of SRS-p resources, compared to the benefit of accuracy improvement that may be obtained by the UE by transmitting the remaining SRS-p symbols in the hop.

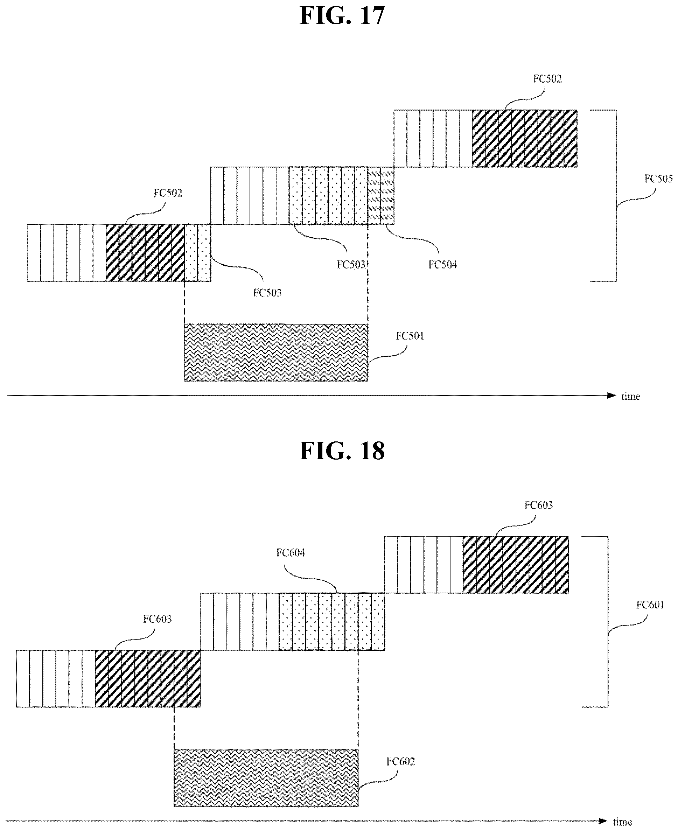

FIG. 17 illustrates an example of the method proposed in Option #1. Referring to FIG. 17, a collision occurs on the time axis between the SRS-p-FH (FC505) consisting of three hops and the interval of Gap-O (FC501), causing some symbols of SRS-p-FH to be dropped. In this case, the SRS-p symbols (FC503) of the SRS-p-FH that overlap with the Gap-O are determined to be dropped and are not transmitted by the UE. On the other hand, on the remaining SRS-p symbols of the SRS-p-FH that do not overlap with the Gap-O, the UE transmits SRS-p (FC502). In the case of FC504, the number of remaining SRS-p symbols available for transmission in the hop due to the overlap with the Gap-O is two. When the proposed additional method is applied, the SRS-p symbols corresponding to FC504 may also be dropped. When the proposed additional method is not applied, the UE may be configured/defined to transmit the symbols. FIG. 17 is merely an example of application of the proposed details, and embodiments are not limited thereto.

(Option #2) Hop-level application of TU-O

The dropping rule may be applied to the entire interval of SRS-p-FH based on the hop-level TU-O. Here, the hop may represent an interval unit in which the same frequency band is maintained for SRS-p transmissions constituting the SRS-p-FH. The UE may check whether the positions of the transmission symbols of actual SRS-p resources constituting the SRS-p-FH overlap with Gap-O, and may be configured/defined to drop the transmission of SRS-p resources for a hop including symbols at which overlapping occurs. This scheme may reduce the complexity and power consumption of the UE by reducing frequency changes including RF retuning of the UE when the UE drops part of SRS-p-FH to ensure the transmission of other signal/channel.

For a unit in which the hop is configured, both an intra-slot multiple hops scheme that allows multiple hops to be configured in a slot and an intra-slot single hop scheme that allows only one hop to be configured in a slot may be considered. Both schemes may support a structure in which the range in which the entire interval of SRS-p-FH is maintained includes multiple slots, and multiple hops occur across multiple slots. When the intra-slot single hop is used, the methods proposed in Option #2 may be configured as slot-level operations. The term "hop" may be replaced with the term "slot."

FIG. 18 illustrates an example of the method proposed in Option #2. In the example of FIG. 18, a collision occurs on the time axis between the SRS-p-FH (FC601 in FIG. 18) consisting of three hops and the interval of Gap-O (FC602 in FIG. 18), causing some symbols of the SRS-p-FH to be dropped. In this case, the hop (FC604) containing the SRS-p symbols of the SRS-p-FH that overlap with the Gap-O is determined to be dropped and is not transmitted by the UE. On the other hand, on the remaining SRS-p symbols of the SRS-p-FH except the dropped hop, the UE transmits SRS-p (FC603 in FIG. 18). FIG. 18 is merely an example of application of the proposed details, and embodiments are not limited thereto.

In the example of FIG. 18, by dropping the hop FC604, the required number of times of RF retuning may decrease by one, and thus power consumption may be reduced. Since only one hop FC604 is dropped, the actual degradation of positioning performance may not be significant.

(Option #3) Bundle of hops-level application of TU-O

The dropping rule may be applied to the entire interval of SRS-p-FH based on the TU-O at the level of bundle of hops. Here, the bundle of hops may represent a set of hops constituting the SRS-p-FH. One bundle of hops may be composed of one or more hops, and one SRS-p-FH may be composed of one or more bundles of hops. The UE may check whether the positions of the transmission symbols of actual SRS-p resources constituting the SRS-p-FH overlap with Gap-O, and may be configured/defined to drop the transmission of SRS-p resources for the bundle of hops including the symbols at which overlapping occurs. This scheme may reduce the complexity and power consumption of the UE by reducing frequency changes including RF retuning of the UE when the UE drops part of SRS-p-FH to ensure the transmission of other signal/channel. Also, when a portion of the interval of the SRS-p-FH is dropped due to other signals/channels transmitted/received due to dynamic scheduling of the serving cell, neighbor cells other than the serving cell may not acquire information about application of the dropping. In this case, the neighbor cells may blindly perform SRS-p-FH reception assuming all possible dropping patterns, thereby significantly increasing the complexity of the BS. By using the structure of the bundle of hops, may reduce the number of possible patterns of the dropping rule may be reduced, and thus it may be expected to reduce the reception complexity of neighbor cells.

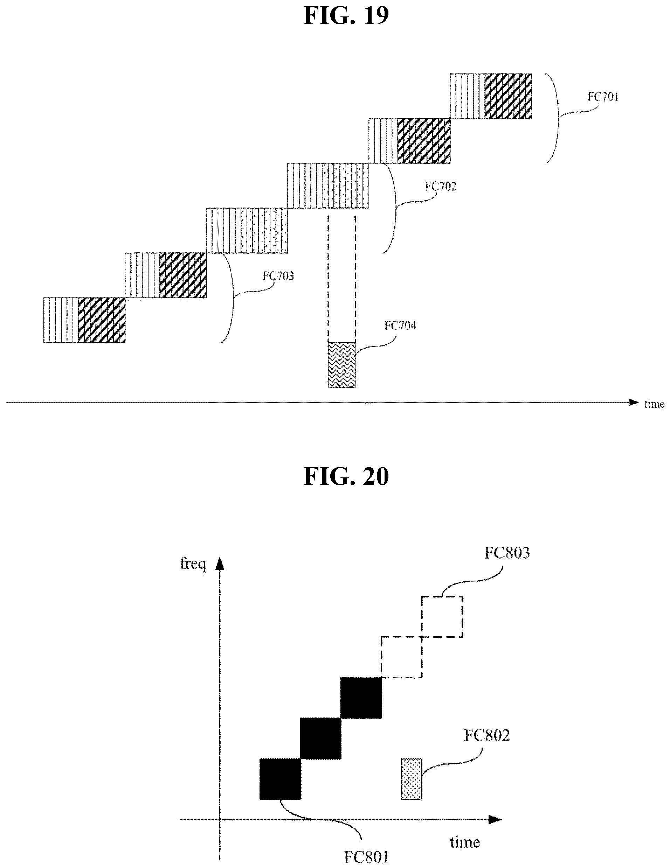

FIG. 19 illustrates an example of the method proposed in Option #3. In FIG. 19, the SRS-p-FH is composed of three bundles of hops (FC701, FC702, FC703 in FIG. 19), each bundle being composed of two hops. In this case, a collision occurs between a bundle and the Gap-O interval (FC704 in FIG. 19) in the time domain, causing some symbols of the SRS-p-FH to be dropped. In this case, the bundle of hops (FC702) including the SRS-p symbols of the SRS-p-FH overlapping with the Gap-O is determined to be dropped and the UE does not transmit the same. On the other hand, for the SRS-p symbols of the SRS-p-FH excluding the dropped hop, the UE transmits the SRS-p (FC701 and FC703 in FIG. 19). FIG. 19 is merely an example of application of the proposed details and embodiments are not limited thereto.

**[Proposal 3] Dropping continuous interval containing a unit of SRS-p-FH overlapping with Gap-O**

The concept and structure of Gap-O described in Proposal 3 may follow the definition of Gap-O described in Proposal 2.

Start/end of SRS-p-FH transmission based on TU-O overlapping with Gap-O.

One of the benefits that can be obtained through SRS-p-FH is that when the transmission BW of SRS-p that may be transmitted by a UE at one time is insufficient to satisfy the target positioning accuracy due to the low BW capability of the UE (e.g., RedCap UE), the receiver is allowed to stack transmissions of SRS-p for multiple hops to produce a virtual effect of wideband SRS-p transmission. To obtain this virtual wideband gain, a coherent combining method may be applied when phase continuity is satisfied between resources of SRS-p received from the respective hops. This method may generally ensure higher positioning accuracy than other reception techniques. However, one condition for ensuring the phase continuity is that hops constituting the SRS-p-FH should occur at consecutive slot positions. If any symbols or hops are dropped in the middle, the phase continuity may not be ensured. Also, as described above, the FH operation may increase the complexity and power consumption of the UE. Accordingly, it may be necessary to design an efficient dropping rule, considering the benefits of improved positioning accuracy and the burden on UE caused by FH operation.

Proposal 3 proposes a method of starting or ending the actual transmission of SRS-p-FH based on actual SRS-p transmission symbols overlapping with the Gap-O interval generated due to a collision between the entire interval of the SRS-p-FH and other signals/channels when a portion of the entire interval of the SRS-p-FH needs to be dropped due to the collision. This is a specific example of the method of starting actual transmission of the SRS-p-FH based on the overlap, which may mean that TU-O is configured based on symbols overlapping with the Gap-O, and the symbols in the entire SRS-p-FH intervals preceding the TU-O are all dropped. Also, as a specific example of the method of ending actual transmission of SRS-p-FH based on the overlap, a TU-O may be configured based on symbols overlapping with the Gap-O, and the symbols in the entire SRS-p-FH intervals subsequent to the TU-O may all be dropped.

FIG. 20 illustrates an example of Proposal 3. Referring to FIG. 20, FC801 indicates a hop where the SRS-p resources constituting SRS-p-FH are actually transmitted, and FC802 indicates transmission/reception of other signals/channels overlapping with a portion of the entire interval of the SRS-p-FH. FIG. 20 illustrates a case where one hop is used per TU-O. The UE performs dropping for the TU-O overlapping with other signals/channels and all subsequent TU-Os (FC803), and performs transmission for the remaining TU-Os. FIG. 20 is merely an example of application of the proposed details and embodiments are not limited thereto.

When a collision occurs with other signals/channels at symbol positions included in a specific TU-O, the criterion for determining whether the actual transmission of SRS-p-FH is to start or end according to the collision may be predefined and fixed. For example, a fixed method defined by standards may be used as this criterion, allowing only the case where actual transmission of SRS-p-FH starts (or ends) based on the TU-O regardless of the position or characteristics of the collision. This scheme may reduce operation complexity for both BS and UE because a single criterion is applied. It is also expected to be advantageous because separate signaling overhead is not generated.

Alternatively, when a collision occurs with other signals/channels at symbol positions included in a specific TU-O, the criterion for determining whether the actual transmission of SRS-p-FH is to start or end according to the collision may be configured/defined to select the case that guarantees a larger number of actually transmittable SRS-p-FH symbols. For example, suppose the number of symbols of the SRS-p-FH transmittable when actual transmission of the SRS-p-FH starts based on the TU-O is N, the number of symbols of the SRS-p-FH transmittable when actual transmission of the SRS-p-FH ends based on the TU-O is M. When N > M, the actual transmission may be configured to start based on the TU-O. When N < M, the actual transmission may be configured/defined to end based on the TU-O. When N = M, at least one of the following may be used.

Alt #1: A predetermined fixed criterion is used, the transmission always starts (or ends) based on the TU-O.

Alt #2: Only the TU-O in which overlapping occurs is dropped and the transmission is performed in all the other intervals, as in Proposal 2.

For the criterion for determining the TU-O and the specific operations of the UE and BS based thereon, one of the options disclosed below may be selected and used. When the BS is allowed to select and apply one of the following options, the BS may provide instruction information related to the operation of the TU-O to the UE through a higher layer signal (e.g., RRC), MAC CE, or DCI, and the UE may receive the information and execute a dropping rule that is applied to the SRS-p-FH.

(Option #1) Symbol-level application of TU-O

The dropping rule may be applied to the entire interval of SRS-p-FH based on the symbol-level TU-O. The UE may check whether the positions of the transmission symbols of actual SRS-p resources constituting the SRS-p-FH overlap with Gap-O, and may be configured/defined to start/end actual transmission of the SRS-p-FH based on the symbols at which overlapping occurs. In this case, the number of SRS-p symbols transmitted by the UE within the interval of SRS-p-FH may be maximized, thereby improving positioning accuracy.

As an additional method applicable to Option #1, when overlapping with Gap-O occurs in a specific hop constituting SRS-p-FH, and the number of remaining SRS-p symbols excluding the symbols dropped due to the overlap is less than or equal to a specific threshold, the remaining symbols may also be configured/defined to be dropped. This scheme may improve UE efficiency in consideration of the complexity and power consumption caused by the operations (e.g., RF retuning) of the UE required for transmission of SRS-p resources, compared to the benefit of accuracy improvement that may be obtained by the UE by transmitting the remaining SRS-p symbols in the hop.

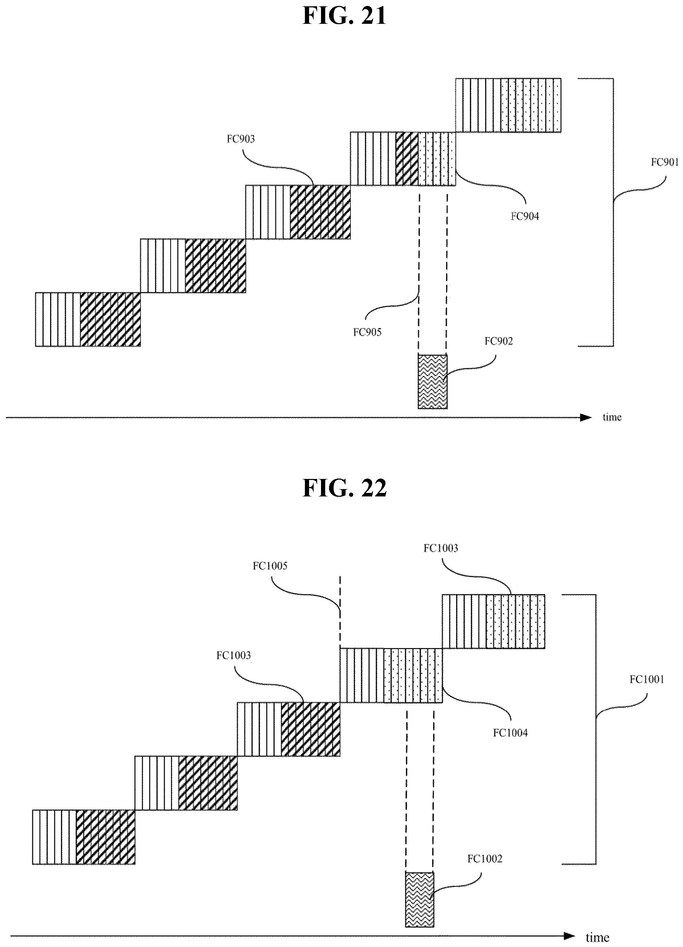

FIG. 21 illustrates an example of the method proposed in Option #1. Referring to FIG. 21, a collision occurs on the time axis between the SRS-p-FH (FC901) consisting of five hops and the interval of Gap-O (FC902), causing actual transmission of the SRS-p-FH to end. In this case, subsequent SRS-p symbols (FC904) based on the SRS-p symbols of the SRS-p-FH that overlap with the Gap-O are all determined to be dropped and the UE does not transmit the same. On the other hand, the UE transmits the SRS-p on the remaining SRS-p symbols of the SRS-p-FH prior to the Gap-O (FC903). The time point at which the actual transmission of the SRS-p-FH ends may be the symbol boundary of FC905. FIG. 21 is merely an example of application of the proposed details and embodiments are not limited thereto.

(Option #2) Hop-level application of TU-O

The dropping rule may be applied to the entire interval of SRS-p-FH based on the hop-level TU-O. Here, the hop may represent an interval unit in which the same frequency band is maintained for SRS-p transmissions constituting the SRS-p-FH. The UE may check whether the positions of the transmission symbols of actual SRS-p resources constituting the SRS-p-FH overlap with Gap-O, and may be configured/defined to determine whether to start or end the actual transmission of the SRS-p-FH based on a hop including the symbols at which overlapping occurs. This scheme may reduce the complexity and power consumption of the UE by reducing frequency changes including RF retuning of the UE when the UE drops part of SRS-p-FH to ensure the transmission of other signal/channel.

For a unit in which the hop is configured, both an intra-slot multiple hops scheme that allows multiple hops to be configured in a slot and an intra-slot single hop scheme that allows only one hop to be configured in a slot may be considered. Both schemes may support a structure in which the range in which the entire interval of SRS-p-FH is maintained includes multiple slots, and multiple hops occur across multiple slots. When the intra-slot single hop is used, the methods proposed in Option #2 may be configured as slot-level operations. The term "hop" may be replaced with the term "slot."

FIG. 22 illustrates an example of the method proposed in Option #2. In the example of FIG. 22, a collision occurs on the time axis between the SRS-p-FH (FC1001) consisting of five hops and the interval of Gap-O (FC1002), causing some symbols of the SRS-p-FH to be dropped. In this case, the hop (FC1004) containing the SRS-p symbols of the SRS-p-FH that overlap with the Gap-O is determined to be dropped. Based on the dropped hop, the subsequent hops (FC1003) are all dropped and are not transmitted by the UE. On the other hand, on the remaining SRS-p symbols of the SRS-p-FH except the dropped hops, the UE transmits SRS-p (FC1003 in FIG. 22). In FIG. 22, the end time of actual transmission of the SRS-p-FH may be s slot (or symbol/hop) boundary of FC1005. FIG. 22 illustrates merely an example of application of the proposed details, and the example in FIG. 22 does not limit the application of the proposed concept to other structures.

(Option #3) Bundle of hops-level application of TU-O

The dropping rule may be applied to the entire interval of SRS-p-FH based on the TU-O at the level of bundle of hops. Here, the bundle of hops may represent a set of hops constituting the SRS-p-FH. One bundle of hops may be composed of one or more hops, and one SRS-p-FH may be composed of one or more bundles of hops. The UE may check whether the positions of the transmission symbols of actual SRS-p resources constituting the SRS-p-FH overlap with Gap-O, and may determine whether to start or end the actual transmission of the SRS-p-FH based on the bundle of hops including the symbols at which overlapping occurs. This scheme may reduce the complexity and power consumption of the UE by reducing frequency changes including RF retuning of the UE when the UE drops part of SRS-p-FH to ensure the transmission of other signal/channel. Also, when a portion of the interval of the SRS-p-FH is dropped due to other signals/channels transmitted/received due to dynamic scheduling of the serving cell, neighbor cells other than the serving cell may not acquire information about application of the dropping. In this case, the neighbor cells may blindly perform SRS-p-FH reception assuming all possible dropping patterns, thereby significantly increasing the complexity of the BS. By using the structure of the bundle of hops, may reduce the number of possible patterns of the dropping rule may be reduced, and thus it may be expected to reduce the reception complexity of neighbor cells.

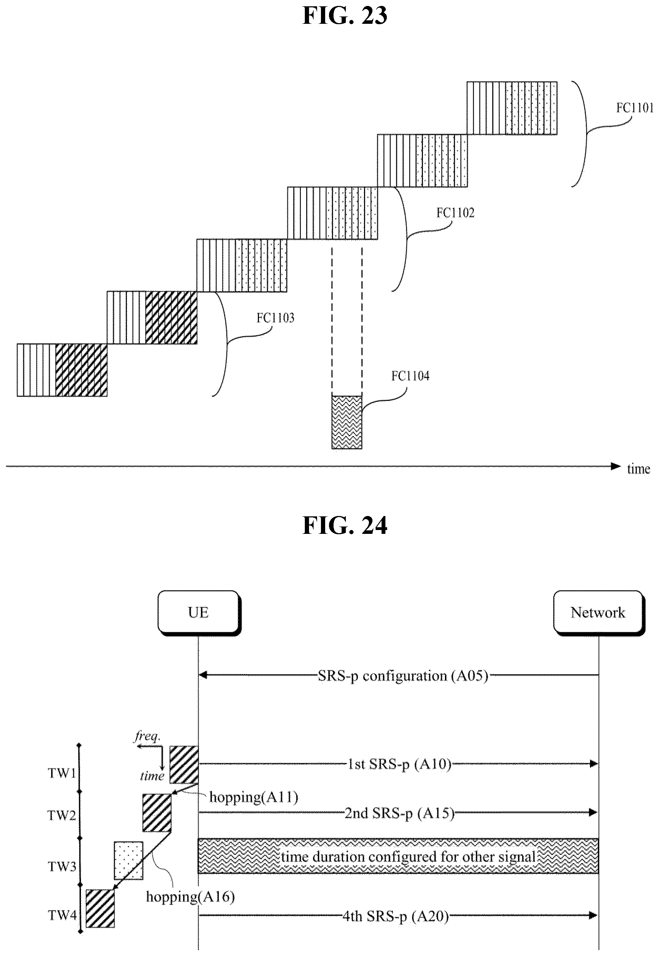

FIG. 23 illustrates an example of the method proposed in Option #3. Referring to FIG. 23, the SRS-p-FH is composed of three bundles of hops (FC1101, FC1102, FC1103), each bundle being composed of two hops. In this case, a collision occurs between a bundle and the Gap-O interval (FC1104) in the time domain, causing some symbols of the SRS-p-FH to be dropped. In this case, the end time of the SRS-p-FH is determined based on the bundle of hops (FC1102) including the SRS-p symbols of the SRS-p-FH overlapping with the Gap-O. On the other hand, on the remaining SRS-p symbols of the SRS-p-FH excluding the dropped bundle of hops, the UE transmits the SRS-p (FC1103). FIG. 23 is merely an example of application of the proposed method, and embodiments are not limited thereto.

**[Proposal 4] Determining the dropping rule to be applied to SRS-p-FH according to configured/indicated conditions**

Proposal 2 may be expected to improve positioning accuracy by increasing the number of SRS-p symbols for transmission by the UE. In particular, as the number of consecutive hops in which actual transmission of SRS-p-FH is performed increases on the time axis, the improvement of positioning accuracy may become enhanced.

Proposal 3 may significantly reduce the number of SRS-p-FH symbols for transmission by the UE and the number of times of hopping, and may thus be advantageous in terms of efficiency of the UE operation. In particular, as the number of consecutive hops on the time axis in actual transmission of SRS-p-FH is performed decreases, the effect of improving positioning accuracy may be reduced. In this case, the UE efficiency may be increased by applying Proposal 3.

Considering the advantages of the proposals, the BS and UE may determine whether to apply Proposal 2 or Proposal 3 for the SRS-p-FH based on the number of configured/specified hops. For example, when there is a threshold N for the number of hops, and the configured or specified number of hops of the SRS-p-FH is greater than or equal to N, situations where a sufficient number of consecutive hops is guaranteed may increase. In this case, the BS and UE may be configured/defined to apply Proposal 2 to drop symbols of the SRS-p-FH. When the number of hops of the SRS-p-FH is less than N, situations where a sufficient number of consecutive hops is guaranteed may hardly occur. In this case, the BS and UE may be configured/defined to apply Proposal 3 to drop symbols of the SRS-p-FH.

The threshold N for the number of hops may be a value (e.g., N=3) predefined and specified in the standards or determined to be a value set by the BS and configured/indicated to the UE through a higher layer signal (e.g., RRC) or MAC CE/DCI.

The proposed method may be expected to provide advantageous effects in that it may appropriately improve UE efficiency and positioning accuracy according to the situations by adaptively applying an appropriate collision handling method depending on the number of hops.

FIG. 24 is a diagram illustrating operations of a UE and a network in a wireless communication system according to an embodiment.

Referring to FIG. 24, the UE may receive configuration for SRS-p from the network through RRC signaling (A05). The configuration for SRS-p may include information for frequency hopping of the SRS-p.

Based on the configuration for the SRS-p, the UE may transmit a first SRS-p in a first frequency band associated with a first time window TW1 (A10).

After transmitting the first SRS-p, the UE may perform frequency band hopping for transmission of a second SRS-p (A11). The UE may perform RF retuning for the frequency band hopping. A time gap for the RF retuning may be configured in at least a portion of the first time window TW1 or the second time window TW2.

The UE may transmit the second SRS-p in a second frequency band associated with the second time window TW2 (A15).

A third time window TW3, which is arranged after the second time window TW2, may at least partially overlap with a time interval configured for another signal. In this case, the UE may drop the transmission of a third SRS-p in the third time window TW3.

The UE may perform frequency hopping from the second frequency band to a fourth frequency band associated with a fourth time window TW4 (A16), and transmit a fourth SRS-p in the fourth frequency band associated with the fourth time window TW4 (A20).

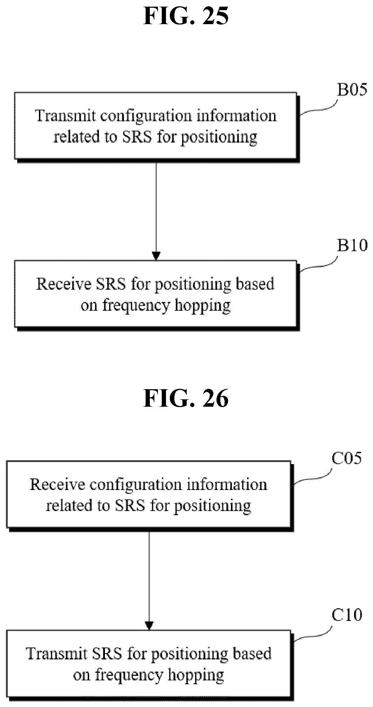

FIG. 25 illustrates a flow of a method of transmitting, by a UE, a sounding reference signal (SRS) in a wireless communication system according to an embodiment.

Referring to FIG. 25, the UE may receive configuration information related to an SRS for positioning through radio resource control (RRC) signaling (B05).

The UE may transmit the SRS for positioning based on hopping among a plurality of SRS frequency bands (B10). The SRS frequency bands for the hopping may be associated with respective SRS time resource sets each including a plurality of time resources.

Based on that a part of a first SRS time resource set overlaps, at least partially, with a time duration configured for another signal, the UE may drop the SRS for positioning in all of the plurality of time resources included in the first SRS time resource set.

The time duration configured for the another signal may include (i) a time resource mapped to the another signal and (ii) a time gap arranged before or after the mapping of the another signal.

Based on that the first SRS time resource set overlaps, at least partially, with the time gap, the UE may drop the SRS for positioning in all of the plurality of time resources included in the first SRS time resource set.

Without hopping to a first SRS frequency band associated with the first SRS time resource set, the UE may hop to a second SRS frequency band, the second SRS frequency band being a next hopping band after the first SRS frequency band.

Based on the hopping to the second SRS frequency band, the UE may resume the transmission of the SRS for positioning in a second SRS time resource set associated with the second SRS frequency band.

Based on that the part of the first SRS time resource set overlaps, at least partially, with the time duration configured for the another signal, the UE may drop the SRS for positioning in at least one of an SRS time resource set arranged before the first SRS time resource set or an SRS time resource set arranged after the first SRS time resource set (e.g., dropping a bundle of hops).

The plurality of symbols included in the first SRS time resource set may include (i) SRS symbols and (ii) at least one time gap symbol arranged before or after the SRS symbols (e.g., Gap-O).

Based on that the at least one time gap symbol overlaps, at least partially, with the time duration configured for the another signal, the UE may drop the SRS for positioning in all of the plurality of time resources included in the first SRS time resource set.

The at least one time gap symbol may be a time duration for frequency re-tuning of the UE.

The total size of the plurality of SRS frequency bands may exceed a maximum UE bandwidth allowing the transmission of the UE (e.g., RedCap UE). The UE may perform hopping among the plurality of SRS frequency bands through the frequency re-tuning of the UE.

FIG. 26 illustrates a flow of a method of receiving an SRS by at least one BS in a wireless communication system according to an embodiment.

Referring to FIG. 26, the BS may transmit configuration information related to an SRS for positioning to a UE through radio resource control (RRC) signaling (C05).

The BS may receive the SRS for positioning from the UE based on hopping among a plurality of SRS frequency bands (C10). The SRS frequency bands for the hopping may be associated with respective SRS time resource sets including a plurality of time resources.

Based on that a part of a first SRS time resource set overlaps, at least partially, with a time duration configured for another signal, the BS may drop reception of the SRS for positioning in all of the plurality of time resources included in the first SRS time resource set.

The time duration configured for the another signal may include (i) a time resource mapped to the another signal and (ii) a time gap arranged before or after the mapping of the another signal.

Based on that the first SRS time resource set overlaps, at least partially, with the time gap, the BS may drop reception of the SRS for positioning in all of the plurality of time resources included in the first SRS time resource set.

The BS may resume the reception of the SRS for positioning in a second SRS time resource set associated with a second SRS frequency band, which is the next hopping band after the first SRS frequency band.

Based on that the part of the first SRS time resource set overlaps, at least partially, with the time duration configured for the another signal, the BS may drop reception of the SRS for positioning in at least one of an SRS time resource set arranged before the first SRS time resource set or an SRS time resource set arranged after the first SRS time resource set (e.g., dropping a bundle of hops).

The plurality of symbols included in the first SRS time resource set may include (i) SRS symbols and (ii) at least one time gap symbol arranged before or after the SRS symbols (e.g., Gap-O).

Based on that the at least one time gap symbol overlaps, at least partially, with the time duration configured for the another signal, the BS may drop reception of the SRS for positioning in all of the plurality of time resources included in the first SRS time resource set.

The at least one time gap symbol may be a time duration for frequency re-tuning of the UE.

The total size of the plurality of SRS frequency bands may exceed a maximum UE bandwidth allowing the transmission of the UE (e.g., RedCap UE). Hopping among the plurality of SRS frequency bands may be performed through the frequency re-tuning of the UE.

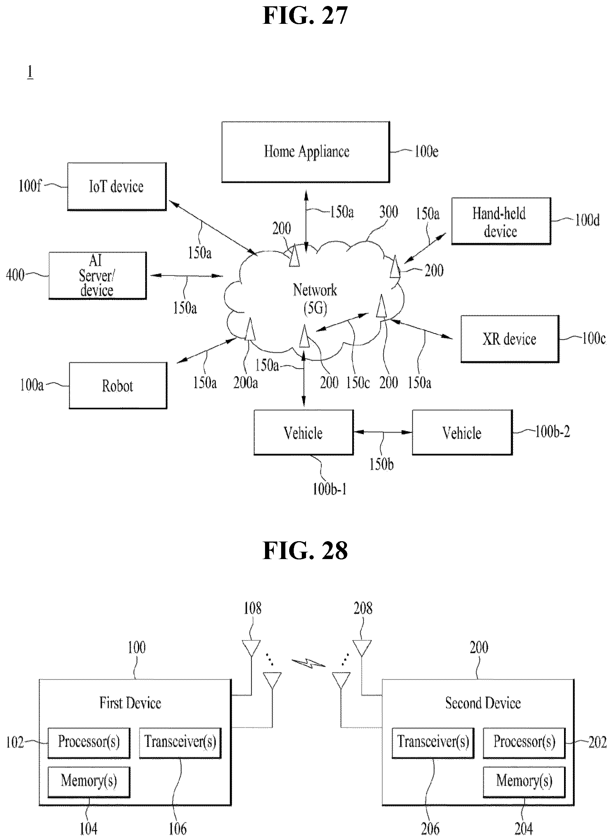

FIG. 27 illustrates a communication system 1 applied to the present disclosure.

Referring to FIG. 27, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 28 illustrates wireless devices applicable to the present disclosure.

Referring to FIG. 28, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 27.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

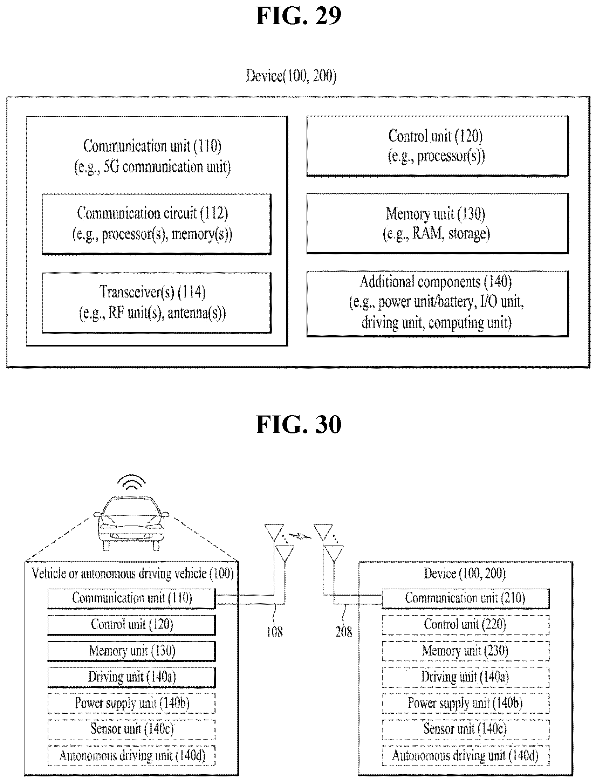

FIG. 29 illustrates another example of a wireless device applied to the present disclosure. The wireless device may be implemented in various forms according to a use-case/service (refer to FIG. 27).

Referring to FIG. 29, wireless devices 100 and 200 may correspond to the wireless devices 100 and 200 of FIG. 28 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 28. For example, the transceiver(s) 114 may include the one or more transceivers 106 and 206 and/or the one or more antennas 108 and 208 of FIG. 28. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 27), the vehicles (100b-1 and 100b-2 of FIG. 27), the XR device (100c of FIG. 27), the hand-held device (100d of FIG. 27), the home appliance (100e of FIG. 27), the IoT device (100f of FIG. 27), a digital broadcast terminal, a hologram device, a public safety device, an MTC device, a medicine device, a fintech device (or a finance device), a security device, a climate/environment device, the AI server/device (400 of FIG. 27), the BSs (200 of FIG. 27), a network node, etc. The wireless device may be used in a mobile or fixed place according to a use-example/service.

In FIG. 29, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 30 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 30, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 29, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The present disclosure is applicable to UEs, BSs, or other apparatuses in a wireless mobile communication system.

**Claims**

1. A method of transmitting a sounding reference signal (SRS) by a terminal in a wireless communication system, the method comprising:

   receiving configuration information related to an SRS for positioning through radio resource control (RRC) signaling; and
   transmitting the SRS for positioning based on hopping among a plurality of SRS frequency bands,
   wherein the plurality of SRS frequency bands for the hopping are associated with respective SRS time resource sets including a plurality of time resources, and
   wherein, based on that a part of a first SRS time resource set overlaps, at least partially, with a time duration configured for another signal, the terminal drops the SRS for positioning in all of the plurality of time resources included in the first SRS time resource set.

2. The method of claim 1, wherein the time duration configured for the another signal comprises (i) a time resource mapped to the another signal and (ii) a time gap arranged before or after the mapping of the another signal, and wherein, based on that the first SRS time resource set overlaps, at least partially, with the time gap, the terminal drops the SRS for positioning in all of the plurality of time resources included in the first SRS time resource set.

3. The method of claim 1, wherein, without hopping to a first SRS frequency band associated with the first SRS time resource set, the terminal hops to a second SRS frequency band, the second SRS frequency band being a next hopping band after the first SRS frequency band.

4. The method of claim 3, wherein, based on the hopping to the second SRS frequency band, the terminal resumes the transmission of the SRS for positioning in a second SRS time resource set associated with the second SRS frequency band.

5. The method of claim 1, wherein, based on that the part of the first SRS time resource set overlaps, at least partially, with the time duration configured for the another signal, the terminal drops the SRS for positioning in at least one of an SRS time resource set arranged before the first SRS time resource set or an SRS time resource set arranged after the first SRS time resource set.

6. The method of claim 1, wherein the plurality of symbols included in the first SRS time resource set comprise (i) SRS symbols and (ii) at least one time gap symbol arranged before or after the SRS symbols.

7. The method of claim 6, wherein, based on that the at least one time gap symbol overlaps, at least partially, with the time duration configured for the another signal, the terminal drops the SRS for positioning in all of the plurality of time resources included in the first SRS time resource set.

8. The method of claim 6, wherein the at least one time gap symbol is a time duration for frequency re-tuning of the terminal.

9. The method of claim 1, wherein a total size of the plurality of SRS frequency bands exceeds a maximum terminal bandwidth that can be transmitted by the terminal, and
wherein the terminal performs hopping among the plurality of SRS frequency bands through the frequency re-tuning of the terminal.

10. A processor-readable recording medium having recorded thereon a program for executing the method of claim 1.

11. A device for wireless communication, the device comprising:

   a memory configured to store instructions; and

a processor configured to perform operations by executing the instructions,
wherein the operations of the processor comprise:

receiving configuration information related to an SRS for positioning through radio resource control (RRC) signaling; and
transmitting the SRS for positioning based on hopping among a plurality of SRS frequency bands,
wherein the plurality of SRS frequency bands for the hopping are associated with respective SRS time resource sets including a plurality of time resources, and
wherein, based on that a part of a first SRS time resource set overlaps, at least partially, with a time duration configured for another signal, the SRS for positioning is dropped in all of the plurality of time resources included in the first SRS time resource set.

12. The device of claim 11, further comprising a transceiver,
wherein the device is a terminal operating in a wireless communication system.

13. The device of claim 11, wherein the device is a processing device configured to control a terminal operating in a wireless communication system.

14. A method of receiving a sounding reference signal (SRS) for positioning by at least one base station in a wireless communication system, the method comprising:

transmitting configuration information related to an SRS for positioning through radio resource control (RRC) signaling; and
receiving the SRS for positioning based on hopping among a plurality of SRS frequency bands,
wherein the plurality of SRS frequency bands for the hopping are associated with respective SRS time resource sets including a plurality of time resources, and
wherein, based on that a part of a first SRS time resource set overlaps, at least partially, with a time duration configured for another signal, the SRS for positioning is dropped in all of the plurality of time resources included in the first SRS time resource set.

15. A base station for wireless communication, the base station comprising:

at least one memory configured to store instructions; and
at least one processor configured to perform operations by executing the instructions,
wherein the operations of the at least one processor comprise:

transmitting configuration information related to an SRS for positioning through radio resource control (RRC) signaling; and
receiving the SRS for positioning based on hopping among a plurality of SRS frequency bands,
wherein the plurality of SRS frequency bands for the hopping are associated with respective SRS time resource sets including a plurality of time resources, and
wherein, based on that a part of a first SRS time resource set overlaps, at least partially, with a time duration configured for another signal, the SRS for positioning is dropped in all of the plurality of time resources included in the first SRS time resource set.

# FIG. 1

Initial Cell Search
System Information Reception
Random Access Procedure
General DL/UL Tx/Rx
S18

| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11   S12   S13   S14   S15   S16   S17

• DL/UL ACK/NACK
• UE CQI/PMI/Rank Report using PUSCH and PUCCH

# FIG. 2

......   One Frame (10ms)   ......

......   Half-Frame (5ms)   Half-Frame (5ms)   ......

......   Subframe 0 (1ms)   ......   Subframe 4 (1ms)   Subframe 5 (1ms)   ......   Subframe 9 (1ms)   ......

Subframe (1ms)

15KHz   Slot (14 symbols)
1ms

30KHz   Slot 0 (14 symbols)   Slot 1
500us

60KHz   Slot 0 (14 symbols)   Slot 1   Slot 2   Slot 3
250us

120KHz   Slot 0 (14 symbols)   Slot 1   Slot 2   Slot 3   Slot 4   Slot 5   Slot 6   Slot 7
125us

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

# FIG. 5

# FIG. 6

UL grant-to-PUSCH offset (K2)

PDCCH

PUSCH

# FIG. 7

Reference Source

GNSS signals (B)

LPP

Measurements(A,B or A+B) or Location

Target Device

Assistance Data

Location server

UE/SET

E-SMLC/SLP/LMF

radio signals (A)

- E-CID Location Information Transfer
- OTDOA Information Transfer
- Reporting of General Error Situations

Reference Source

NRPPa

ACCESS NODE / BS / TS / NG-RAN

# FIG. 8

# FIG. 9

(a)

(b)

# FIG. 10

# FIG. 11

EP 4 668 590 A1

FIG. 12

(a) BS mono-static

(b) BS bi-static

(c) BS-to-UE bi-static

(d) UE mono-static

(e) UE bi-static

(f) UE-to-BS bi-static

# FIG. 13

# FIG. 14

# FIG. 15

# FIG. 16

## FIG. 17

## FIG. 18

# FIG. 19

FC701

FC702

FC703

FC704

time

# FIG. 20

freq

FC803

FC802

FC801

time

# FIG. 21

FC903

FC901

FC904

FC905

FC902

time

# FIG. 22

FC1005

FC1003

FC1003

FC1001

FC1004

FC1002

time

# FIG. 23

# FIG. 24

# FIG. 25

Transmit configuration information related to SRS for positioning — B05

Receive SRS for positioning based on frequency hopping — B10

# FIG. 26

Receive configuration information related to SRS for positioning — C05

Transmit SRS for positioning based on frequency hopping — C10

# FIG. 27

1

# FIG. 28

# FIG. 29

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 30

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108    208

Device (100, 200)

Communication unit (210)

Control unit (220)

Memory unit (230)

Driving unit (140a)

Power supply unit (140b)

Sensor unit (140c)

Autonomous driving unit (140d)

## INTERNATIONAL SEARCH REPORT

International application No.

**PCT/KR2024/095314**

| A. | CLASSIFICATION OF SUBJECT MATTER |
|---|---|

**H04B 1/7143**(2011.01)i; **H04L 5/00**(2006.01)i; **H04W 64/00**(2009.01)i; **H04W 24/08**(2009.01)i

According to International Patent Classification (IPC) or to both national classification and IPC

| B. | FIELDS SEARCHED |
|---|---|

Minimum documentation searched (classification system followed by classification symbols)

H04B 1/7143(2011.01); H04B 7/06(2006.01); H04W 4/00(2009.01); H04W 72/04(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SRS(sounding reference signal), RRC(radio resource control), 시간(time), 자원 (resource), 포지셔닝(positioning)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2020-0032275 A (LG ELECTRONICS INC.) 25 March 2020 (2020-03-25)<br>See claim 1. | 1-15 |
| A | KR 10-2021-0101339 A (LG ELECTRONICS INC.) 18 August 2021 (2021-08-18)<br>See claims 1 and 5-6. | 1-15 |
| A | KR 10-2019-0002705 A (HUAWEI TECHNOLOGIES CO., LTD.) 08 January 2019 (2019-01-08)<br>See paragraphs [0286]-[0385]; and figures 1-6. | 1-15 |
| A | KR 10-2021-0081427 A (ZTE CORPORATION) 01 July 2021 (2021-07-01)<br>See paragraphs [0010]-[0071]; and figures 1-3. | 1-15 |
| A | US 2011-0268028 A1 (STERN-BERKOWITZ, Janet A. et al.) 03 November 2011 (2011-11-03)<br>See claims 1-17; and figures 2-10. | 1-15 |

|  |  |
|---|---|
| ☐ Further documents are listed in the continuation of Box C. | ☑ See patent family annex. |

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 May 2024** | **03 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT | | | International application No. | | |
|---|---|---|---|---|---|
| Information on patent family members | | | PCT/KR2024/095314 | | |

| Patent document cited in search report | | | Publication date (day/month/year) | Patent family member(s) | | | Publication date (day/month/year) |
|---|---|---|---|---|---|---|---|
| KR | 10-2020-0032275 | A | 25 March 2020 | CN | 109923828 | A | 21 June 2019 |
| | | | | CN | 109923828 | B | 01 February 2022 |
| | | | | EP | 3471327 | A1 | 17 April 2019 |
| | | | | EP | 3471327 | A4 | 21 August 2019 |
| | | | | EP | 3471327 | B1 | 11 August 2021 |
| | | | | EP | 3910865 | A1 | 17 November 2021 |
| | | | | EP | 3910865 | A4 | 17 November 2021 |
| | | | | EP | 3910865 | B1 | 13 March 2024 |
| | | | | JP | 2020-502932 | A | 23 January 2020 |
| | | | | JP | 6810269 | B2 | 06 January 2021 |
| | | | | KR | 10-2019-0039070 | A | 10 April 2019 |
| | | | | KR | 10-2257816 | B1 | 28 May 2021 |
| | | | | KR | 10-2270085 | B1 | 28 June 2021 |
| | | | | US | 10841059 | B2 | 17 November 2020 |
| | | | | US | 10979186 | B2 | 13 April 2021 |
| | | | | US | 11632279 | B2 | 18 April 2023 |
| | | | | US | 2019-0190669 | A1 | 20 June 2019 |
| | | | | US | 2019-0199497 | A1 | 27 June 2019 |
| | | | | US | 2021-0211254 | A1 | 08 July 2021 |
| | | | | WO | 2018-203653 | A1 | 08 November 2018 |
| KR | 10-2021-0101339 | A | 18 August 2021 | CN | 110945824 | A | 31 March 2020 |
| | | | | CN | 110945824 | B | 02 December 2022 |
| | | | | CN | 115767749 | A | 07 March 2023 |
| | | | | EP | 3661097 | A1 | 03 June 2020 |
| | | | | EP | 3661097 | A4 | 07 April 2021 |
| | | | | EP | 3661097 | B1 | 27 March 2024 |
| | | | | JP | 2020-528690 | A | 24 September 2020 |
| | | | | KR | 10-2020-0008599 | A | 28 January 2020 |
| | | | | KR | 10-2290761 | B1 | 18 August 2021 |
| | | | | KR | 10-2355636 | B1 | 08 February 2022 |
| | | | | SG | 11201913228 | YA | 30 January 2020 |
| | | | | US | 11558161 | B2 | 17 January 2023 |
| | | | | US | 11968145 | B2 | 23 April 2024 |
| | | | | US | 2021-0083825 | A1 | 18 March 2021 |
| | | | | US | 2023-0121186 | A1 | 20 April 2023 |
| | | | | WO | 2019-022329 | A1 | 31 January 2019 |
| KR | 10-2019-0002705 | A | 08 January 2019 | CN | 107836134 | A | 23 March 2018 |
| | | | | CN | 107836134 | B | 08 September 2020 |
| | | | | CN | 109561505 | A | 02 April 2019 |
| | | | | CN | 109561505 | B | 10 March 2020 |
| | | | | EP | 3457801 | A1 | 20 March 2019 |
| | | | | EP | 3457801 | A4 | 24 April 2019 |
| | | | | EP | 3457801 | B1 | 19 August 2020 |
| | | | | EP | 3783992 | A1 | 24 February 2021 |
| | | | | EP | 3783992 | B1 | 12 October 2022 |
| | | | | EP | 4135466 | A1 | 15 February 2023 |
| | | | | ES | 2824198 | T3 | 11 May 2021 |
| | | | | ES | 2934599 | T3 | 23 February 2023 |
| | | | | JP | 2019-518375 | A | 27 June 2019 |
| | | | | JP | 6683842 | B2 | 22 April 2020 |

Form PCT/ISA/210 (patent family annex) (July 2022)

**INTERNATIONAL SEARCH REPORT**
Information on patent family members

International application No.

**PCT/KR2024/095314**

| Patent document cited in search report | | | Publication date (day/month/year) | Patent family member(s) | | | Publication date (day/month/year) |
|---|---|---|---|---|---|---|---|
| | | | | KR | 10-2219564 | B1 | 25 February 2021 |
| | | | | US | 11096156 | B2 | 17 August 2021 |
| | | | | US | 11516779 | B2 | 29 November 2022 |
| | | | | US | 11737101 | B2 | 22 August 2023 |
| | | | | US | 2020-0329471 | A1 | 15 October 2020 |
| | | | | US | 2022-0015090 | A1 | 13 January 2022 |
| | | | | WO | 2017-193408 | A1 | 16 November 2017 |
| KR | 10-2021-0081427 | A | 01 July 2021 | CN | 110535595 | A | 03 December 2019 |
| | | | | CN | 110535595 | B | 17 February 2023 |
| | | | | EP | 3876461 | A1 | 08 September 2021 |
| | | | | EP | 3876461 | A4 | 27 July 2022 |
| | | | | US | 2022-0006588 | A1 | 06 January 2022 |
| | | | | WO | 2020-088686 | A1 | 07 May 2020 |
| US | 2011-0268028 | A1 | 03 November 2011 | CN | 103069739 | A | 24 April 2013 |
| | | | | CN | 103069739 | B | 21 September 2016 |
| | | | | CN | 106130708 | A | 16 November 2016 |
| | | | | CN | 106130708 | B | 28 June 2019 |
| | | | | EP | 2553860 | A1 | 06 February 2013 |
| | | | | EP | 2553860 | B1 | 01 June 2016 |
| | | | | EP | 3070872 | A1 | 21 September 2016 |
| | | | | EP | 3070872 | B1 | 13 June 2018 |
| | | | | EP | 3439220 | A1 | 06 February 2019 |
| | | | | JP | 2013-528016 | A | 04 July 2013 |
| | | | | JP | 2014-140241 | A | 31 July 2014 |
| | | | | JP | 2015-084550 | A | 30 April 2015 |
| | | | | JP | 2017-011714 | A | 12 January 2017 |
| | | | | JP | 5514954 | B2 | 04 June 2014 |
| | | | | JP | 5662608 | B2 | 04 February 2015 |
| | | | | JP | 6389849 | B2 | 12 September 2018 |
| | | | | KR | 10-1828621 | B1 | 22 March 2018 |
| | | | | KR | 10-2013-0019415 | A | 26 February 2013 |
| | | | | US | 10568048 | B2 | 18 February 2020 |
| | | | | US | 11419063 | B2 | 16 August 2022 |
| | | | | US | 11929860 | B2 | 12 March 2024 |
| | | | | US | 2017-0353931 | A1 | 07 December 2017 |
| | | | | US | 2020-0260388 | A1 | 13 August 2020 |
| | | | | US | 2023-0059545 | A1 | 23 February 2023 |
| | | | | US | 9749968 | B2 | 29 August 2017 |
| | | | | WO | 2011-123805 | A1 | 06 October 2011 |

Form PCT/ISA/210 (patent family annex) (July 2022)